(19) Europäisches Patentamt
European Patent Office
Office européen des brevets

(11) EP 4 815 053 A1

(12) EUROPEAN PATENT APPLICATION
published in accordance with Art. 153(4) EPC

(43) Date of publication:
**30.09.2026 Bulletin 2026/40**

(21) Application number: **24895707.8**

(22) Date of filing: **31.07.2024**

(51) International Patent Classification (IPC):
***H01M 4/36*** *(2006.01)* ***H01M 4/525*** *(2010.01)*

(52) Cooperative Patent Classification (CPC):
**H01M 4/131; H01M 4/36; H01M 4/505; H01M 4/525; H01M 10/054;** Y02E 60/10

(86) International application number:
**PCT/CN2024/108984**

(87) International publication number:
**WO 2025/112604 (05.06.2025 Gazette 2025/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.11.2023 CN 202311641701**

(71) Applicant: **Contemporary Amperex Technology Co., Limited**
**Ningde, Fujian 352100 (CN)**

(72) Inventors:
- **WU, Kai**
  **Ningde, Fujian 352100 (CN)**
- **TANG, Zheng**
  **Ningde, Fujian 352100 (CN)**
- **OUYANG, Shaocong**
  **Ningde, Fujian 352100 (CN)**
- **YE, Yonghuang**
  **Ningde, Fujian 352100 (CN)**
- **LI, Quanguo**
  **Ningde, Fujian 352100 (CN)**
- **JIN, Haizu**
  **Ningde, Fujian 352100 (CN)**
- **CHEN, Jiahua**
  **Ningde, Fujian 352100 (CN)**

(74) Representative: **Ziebig Hengelhaupt Intellectual Property Attorneys Patentanwaltskanzlei PartGmbB**
**Leipziger Straße 49**
**10117 Berlin (DE)**

# (54) POSITIVE ELECTRODE MATERIAL COMPOSITION AND PREPARATION METHOD THEREFOR, POSITIVE ELECTRODE, SODIUM BATTERY, AND ELECTRIC DEVICE

(57) A positive electrode material composition and a preparation method therefor, a positive electrode, a sodium battery, and an electric device. The positive electrode material composition comprises at least two nickel-iron-manganese-based sodium battery positive electrode active materials; the nickel-iron-manganese-based sodium battery positive electrode active materials are physically mixed; and the mixture of the nickel-iron-manganese-based sodium battery positive electrode active materials also contains a Cu element and a Q element. The positive electrode comprises the positive electrode material composition, and the sodium battery comprises the positive electrode. The electric device comprises the sodium battery. The positive electrode material composition can improve the direct-current internal resistance stability of the battery cell of the battery in the charging and discharging process.

10
12
11

FIG. 1



Processed by Luminess, 75001 PARIS (FR)

## Description

The present application claims priority to Chinese Patent Application No. 202311641701.9 entitled "POSITIVE ELECTRODE MATERIAL COMPOSITION, PREPARATION METHOD THEREFOR, POSITIVE ELECTRODE, SODIUM BATTERY, AND ELECTRIC DEVICE" and filed with China National Intellectual Property Administration on November 30, 2023, the content of which is incorporated herein by reference in its entirety.

TECHNICAL FIELD

The present application relates to the technical field of sodium batteries, and in particular, to a positive electrode material composition, a preparation method therefor, a positive electrode, a sodium battery, and an electric device.

BACKGROUND

Sodium-ion batteries have advantages such as abundant raw material reserves, low cost, relatively stable chemical performance, and good safety, and are expected to enter the market as substitutes for lithium-ion batteries. With the continuous development of new energy vehicles and the continuous increase in the proportion of clean energy, higher requirements have been imposed on the energy conversion efficiency, energy density, cycling stability, and other performance of ion batteries.

Among the performance metrics, the impedance of the battery cell and the stability of the impedance are important factors affecting the energy conversion efficiency of the battery cell. However, the impedance stability of current battery cells, such as sodium batteries, still needs further improvement to better meet current market needs for battery applications.

SUMMARY

In view of the above problems, the present application provides a positive electrode material composition, a preparation method therefor, a positive electrode including the positive electrode material composition, and a sodium battery including the positive electrode, to solve the technical problem of unsatisfactory impedance stability of existing battery cells.

In a first aspect, embodiments of the present application provide a positive electrode material composition. The positive electrode material composition of the embodiments of the present application includes at least two nickel-iron-manganese-based sodium-ion battery positive electrode active materials. The nickel-iron-manganese-based sodium-ion battery positive electrode active materials are physically mixed, and a mixture of the nickel-iron-manganese-based sodium-ion battery positive electrode active materials further includes a Cu element and a Q element; in a unit molar amount of the positive electrode material composition, a total molar content of Na is 0.78-1 mol.

A total molar content of Ni is 0.12-0.38 mol.

A total molar content of Mn is 0.18-0.48 mol.

A total molar content of Fe is 0.18-0.35 mol.

A total molar content of Q is 0.01-0.12 mol.

A total molar content of Cu is 0.01-0.14 mol.

The Q includes at least one of a Zn element, an Mg element, and a Ti element.

In the positive electrode material composition of the embodiments of the present application, two or more nickel-iron-manganese-based sodium-ion battery positive electrode active materials are physically mixed to form a mixture, and contents of metal elements such as the Na element, the Ni element, the Mn element, the Fe element, the Cu element, and the Q element included in the mixture are controlled to be within the above ranges, such that the direct current resistance (DCR) of a battery cell including the positive electrode material composition of the embodiments of the present application is enabled to be relatively stable during charging and discharging processes, and the DCR growth rate of the battery cell during the charging and discharging processes can be significantly reduced. On this basis, the energy density and the cycle performance of the battery cell can also be improved.

In some embodiments, in a unit molar amount of the positive electrode material composition, a molar content of at least one of the Na element, the Ni element, the Mn element, the Fe element, the Cu element, and a Y element is as follows:

the total molar content of the Na is 0.8-1 mol;

the total molar content of the Ni is 0.15-0.35 mol;

the total molar content of the Mn is 0.20-0.45 mol;

the total molar content of the Fe is 0.20-0.33 mol;

the total molar content of the Q is 0.01-0.06 mol; and

the total molar content of the Cu is 0.02-0.09 mol.

By selectively controlling the total molar content of at least one of the Na element, the Ni element, the Mn element, the Fe element, the Cu element, and the metal element represented by Q within the above ranges, the disordered arrangement of the metal elements in the transition metal layer included in each nickel-iron-manganese-based sodium-ion battery positive electrode active material can be further adjusted, and the spacing between the transition metal layer and the sodium layer can be adjusted, thereby further improving the DCR stability performance of the battery cell including the positive electrode material composition of the embodiments of the present application during the charging and discharging processes. In particular, the Cu element and the metal element represented by Q, having contents within the above ranges, can enhance the synergistic effect on the DCR stability of the battery cell, thereby further improving the DCR stability of the battery cell. Additionally, the cycle performance and the specific capacity delivery of each nickel-iron-manganese-based sodium-ion battery positive electrode active material are further improved.

In some embodiments, at least one of the nickel-iron-manganese-based sodium-ion battery positive electrode active materials further includes an active and/or inert doping metal element; in a unit molar amount of the positive electrode material composition, a total molar content of the doping metal element is greater than 0 and less than or equal to 0.13 mol, optionally greater than 0 and less than or equal to 0.1 mol. The doping metal element in the content range can participate in the disordered arrangement among the metal elements in the transition metal layer included in the nickel-iron-manganese-based sodium-ion battery positive electrode active material and can adjust the spacing between the transition metal layer and the sodium layer; the doping metal element in the content range can also improve the relevant electrochemical performance of each nickel-iron-manganese-based sodium-ion battery positive electrode active material, thereby further improving the DCR stability performance of the battery cell including the positive electrode material composition of the embodiments of the present application during the charging and discharging processes, so as to alleviate the increase of the DCR of the battery cell during the charging and discharging processes. Additionally, the structural stability and/or the specific capacity delivery of the nickel-iron-manganese-based sodium-ion battery positive electrode active material can also be improved.

In an exemplary embodiment, the doping metal element includes at least one of V, Ca, Cr, Al, Sc, Sn, Sb, Zr, Nb, Ru, and Ir. By incorporating these types of doping metal elements into the transition metal layer included in the nickel-iron-manganese-based sodium-ion battery positive electrode active material including doping metal elements, the disordered arrangement of the metal elements in the transition metal layer is adjusted, and the spacing between the transition metal layer and the sodium layer can also be adjusted, thereby further improving the DCR stability performance of the battery cell including the positive electrode material composition of the embodiments of the present application during the charging and discharging processes, so as to alleviate the increase of the DCR of the battery cell during the charging and discharging processes and improve the structural stability and/or the specific capacity delivery of the nickel-iron-manganese-based sodium-ion battery positive electrode active material.

In some embodiments, in a unit molar amount of the positive electrode material composition, a ratio of a molar content of the Na element to a total molar content of other metal elements is (0.81-0.89):1, optionally (0.82-0.89):1. Controlling the ratio of the total molar content of the Na element to the total molar content of the other metal elements within the range can further adjust the content of sodium ions, and increase the content of sodium ions that can be intercalated and deintercalated in the nickel-iron-manganese-based sodium-ion battery positive electrode active material, thereby increasing the reversible capacity of the positive electrode material composition. In addition, the structural stability of the nickel-iron-manganese-based sodium-ion battery positive electrode active material can also be improved, so as to improve the cycle performance of the nickel-iron-manganese-based sodium-ion battery positive electrode active material.

In some embodiments, the Cu element and the Q element are distributed in different nickel-iron-manganese-based sodium-ion battery positive electrode active materials. Blending the nickel-iron-manganese-based sodium-ion battery positive electrode active material including the Cu element and the nickel-iron-manganese-based sodium-ion battery positive electrode active material including the Q element to form a mixture can balance the specific capacity and the cycle performance of the positive electrode material composition of the embodiments of the present application, and can also further improve the DCR stability performance of the battery cell including the positive electrode material composition of the embodiments of the present application during the charging and discharging processes, so as to alleviate the increase of the DCR of the battery cell during the charging and discharging processes.

In the embodiments, the nickel-iron-manganese-based sodium-ion battery positive electrode active material including the Q element satisfies at least one of the following (1) to (4):

(1) a Dv50 particle size is 3-8 $\mu$m, optionally 4-6.5 $\mu$m;

(2) a Dv90 particle size is 8-16 μm, optionally 10-14 μm;

(3) a compacted density under a pressure of 3 tons is higher than 3.1 $g/cm^3$, optionally 3.1-3.4 $g/cm^3$; and

(4) a specific surface area is 0.4-1.0 $m^2/g$, optionally 0.6-0.9 $m^2/g$.

In the embodiments, the nickel-iron-manganese-based sodium-ion battery positive electrode active material including the Cu element satisfies at least one of the following (1) to (4):

(1) a Dv50 particle size is 5-11 μm, optionally 6.5-10 μm;

(2) a Dv90 particle size is 13-19 μm, optionally 14.5-18 μm;

(3) a compacted density under a pressure of 3 tons is 3.0-3.3 $g/cm^3$, optionally 3.0-3.25 $g/cm^3$; and

(4) a specific surface area is 0.4-0.7 $m^2/g$, optionally 0.5-0.6 $m^2/g$.

The nickel-iron-manganese-based sodium-ion battery positive electrode active material including the Q element and the nickel-iron-manganese-based sodium-ion battery positive electrode active material including the Cu element are within the above ranges, which can improve the performance such as the stability of the contact interface between the positive electrode material composition of the embodiments of the present application and an electrolytic solution, and improve the DCR stability performance of the battery cell including the positive electrode material composition of the embodiments of the present application during the charging and discharging processes. Additionally, the specific capacity and the cycle performance of the positive electrode material composition of the embodiments of the present application can also be improved.

In some embodiments, each of the nickel-iron-manganese-based sodium-ion battery positive electrode active materials independently satisfies at least one of the following (1) to (2):

(1) a crystal structure includes an O3 phase layered metal oxide, and the O3 phase layered metal oxide accounts for 95% or more of a total weight of the layered oxides; and/or

(2) a single crystal is included, and a morphology of the single crystal is block-like.

The selected single-crystal O3-phase nickel-iron-manganese-based sodium-ion battery positive electrode active material exhibits relatively high structural stability, thereby improving the cycle performance of the battery cell.

In some embodiments, a discharge specific capacity of the positive electrode material composition at 1.5-4.2 V and 0.1 C is 115-128 mAh/g, optionally 120-128 mAh/g.

In a second aspect, the embodiments of the present application provide a preparation method for the positive electrode material composition. The preparation method for the positive electrode material composition of the embodiments of the present application includes the following steps:

physically mixing at least two nickel-iron-manganese-based sodium-ion battery positive electrode active materials according to a molar content ratio of the Na, the Ni, the Mn, the Fe, the Q, and the Cu included in a unit molar amount of the positive electrode material composition, to form the positive electrode material composition.

By mixing the at least two nickel-iron-manganese-based sodium-ion battery positive electrode active materials according to the ratio of the content ranges of the Na element, the Ni element, the Mn element, the Fe element, the Cu element, and the Q element, the preparation method for the positive electrode material composition of the embodiments of the present application enables the battery cell including the positive electrode material composition of the embodiments of the present application to have a small DCR growth rate during the charging and discharging processes, and also enables the positive electrode material composition of the embodiments of the present application to possess high specific capacity and good cycle performance.

In a third aspect, the embodiments of the present application provide a positive electrode. The positive electrode of the embodiments of the present application includes a positive electrode active substance layer, and the positive electrode active substance layer includes the positive electrode material composition of the embodiments of the present application or the positive electrode material composition prepared by the preparation method for the positive electrode material composition of the embodiments of the present application.

Because the positive electrode active substance layer of the positive electrode of the embodiments of the present application includes the positive electrode material composition of the embodiments of the present application, the DCR growth rate of the battery cell including the positive electrode of the embodiments of the present application during the

charging and discharging processes is small. Additionally, the energy density of the battery cell is high, and the cycle performance of the battery cell is good.

In some embodiments, a content of the positive electrode active substance layer on a single surface of a current collector is 260-350 mg/1540.25 $mm^2$, optionally 280-320 mg/1540.25 $mm^2$.

In some embodiments, a compacted density of an electrode plate of the positive electrode is 2.6-3.4 $g/cm^3$, optionally 2.8-3.2 $g/cm^3$.

In some embodiments, a porosity of the positive electrode active substance layer is 40-70%, optionally 50-65%.

In some embodiments, the positive electrode is an electrode plate, and a ratio of a thickness from one surface of the electrode plate to the other opposite surface of the electrode plate to a thickness of the current collector is (7-15):1, optionally (8-14):1.

In some embodiments, the positive electrode is an electrode plate, and a film resistance of the electrode plate is 0.5-5 m$\Omega$, optionally 0.5-3 m$\Omega$.

When the positive electrode of the embodiments of the present application is within the above ranges, the stability of the contact interface between the electrode plate and the electrolytic solution enables the DCR of the battery cell including the positive electrode of the embodiments of the present application to be relatively stable during the charging and discharging processes, and the battery cell exhibits high energy density and good cycle performance.

In some embodiments, a conductive agent included in the positive electrode active substance layer includes a linear conductive agent.

In an embodiment, the linear conductive agent satisfies at least one of the following (1) to (5):

(1) a mass content of the positive electrode active substance layer is 0.1-2.5%, optionally 0.3-0.7%;

(2) an aspect ratio is (40-3000):1, optionally (50-2500):1;

(3) a length is 0.5-5 $\mu$m, optionally 0.5-2 $\mu$m;

(4) a diameter is 2-10 nm, optionally 3-7 nm; and

(5) at least one of a carbon nanotube, a carbon fiber, and a conductive oxide nanowire is included.

The linear conductive agent is added to the positive electrode active substance layer, the content of the linear conductive agent is controlled within the range, and the type, aspect ratio, length, diameter, and the like of the linear conductive agent are selectively controlled within the above ranges, such that the linear conductive agent can form an abundant conductive network structure in the positive electrode active substance layer, and the linear conductive agent can also wrap around the surfaces of flat single crystal particles. The particulate conductive agent can be effectively dispersed in the interstices of the positive electrode material composition. In this way, the linear conductive agent effectively improves the conductivity of the positive electrode active substance layer, can significantly reduce the internal resistance of the positive electrode, and is also conducive to improving the DCR stability of the battery electrical properties during the charging and discharging processes.

In a fourth aspect, the embodiments of the present application provide a sodium battery. The sodium battery according to the embodiments of the present application includes the positive electrode of the embodiments of the present application. The contact interface between the electrode assembly included in the sodium battery cell of the embodiments of the present application and the electrolytic solution is stable, and the DCR during the charging and discharging processes is stable. On this basis, the battery cell also exhibits electrochemical performance such as high energy density and good cycle performance.

In some embodiments, the sodium battery is a sodium battery cell, and the sodium battery cell satisfies at least one of the following (1) to (3):

(1) an operating voltage is 1.5-4.0 V; and/or

(2) an energy density at 1.5-4.0 V is 120-130 Wh/Kg; and

(3) a direct current resistance growth rate of the sodium battery cell after 1000 cycles is lower than 180%.

In a fifth aspect, the embodiments of the present application provide an electric device. The embodiments of the present application include the sodium battery of the embodiments of the present application.

The electric device of the embodiments of the present application features a long standby time or endurance time, and a long service life.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

## BRIEF DESCRIPTION OF THE DRAWINGS

By reading the detailed description of the preferred implementations below, various additional advantages and benefits will become clear to those of ordinary skill in the art. The drawings are provided solely for the purpose of illustrating the preferred implementations and shall not be construed as limiting the present application. Furthermore, the same reference numerals in all the drawings denote identical components. In the drawings:

FIG. 1 is a schematic structural diagram of a positive electrode according to some embodiments of the present application;

FIG. 2 is another schematic structural diagram of a positive electrode according to some embodiments of the present application;

FIG. 3 is a schematic structural diagram of an implementation of a sodium battery cell according to an embodiment of the present application;

FIG. 4 is a schematic exploded view of the sodium battery cell shown in FIG. 3;

FIG. 5 is a schematic structural diagram of an implementation of a battery module according to an embodiment of the present application;

FIG. 6 is a schematic structural diagram of an implementation of a battery pack according to an embodiment of the present application;

FIG. 7 is a schematic diagram of an exploded structure of the battery pack shown in FIG. 6; and

FIG. 8 is a schematic diagram of an implementation of an electric device including the battery according to an embodiment of the present application as a power source.

Reference numerals in the detailed description are as follows:

10-positive electrode, 11 current collector, 12-positive electrode active substance layer;

20-battery cell, 21-shell body, 22-electrode assembly, 23-cover plate;

30-battery module;

40-battery pack, 41-upper case body, 42-lower case body.

## DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, the technical terms such as "first" and "second" are only used to distinguish different objects and should not be interpreted as indicating or implying the relative importance or implicitly indicating the number, specific order, or priority of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the drawings. They are merely for the convenience of describing the embodiments of the present application and simplifying the description, rather than indicating or implying that the device or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

Sodium-ion batteries (SIBs) have become ideal candidates for energy storage systems due to abundant raw material reserves and low cost. In addition, the SIBs also have tremendous application space in the new energy vehicle market. With the rapid development of energy storage systems and new energy vehicles, market requirements for the performance, such as energy conversion efficiency, energy density, and cycling stability, of batteries including the sodium-ion batteries are becoming increasingly high.

Among the performance metrics, the impedance and the impedance stability of a battery cell are among the important factors affecting the energy conversion efficiency of the battery cell. Currently, methods for reducing the impedance of the battery cell or improving the stability of the impedance generally mainly include optimizing the design of electrode plates, improving the electrolytic solution wettability, and adopting advanced manufacturing processes. Although the methods can improve the impedance of the battery cell and enhance the stability of the impedance to a certain extent, the improvement effects of the methods on the impedance and the impedance stability of the battery cell are not particularly ideal, and the methods also lead to a decrease in the chemical performance, such as the energy density or the cycle performance, of the battery cell or an increase in costs.

Regarding a sodium-ion battery, the positive electrode material of the sodium-ion battery can provide active sodium ions and is an important component of the sodium-ion battery. Among the positive electrode materials of sodium-ion batteries, sodium-ion battery layered oxides have attracted much attention due to high specific capacity and a structure similar to that of the positive electrode materials of lithium-ion batteries.

Based on the structure of the sodium-ion battery layered oxide positive electrode materials, current views hold that the sodium-ion battery layered oxide positive electrode materials have an important correlation with the energy density and cycle performance of sodium battery cells. Therefore, the industry currently also regulates the crystal stability and doping of the sodium-ion battery layered oxide positive electrode materials to improve the electrochemical performance, such as the specific capacity and the structural stability, of the sodium-ion battery layered oxide positive electrode materials, so as to achieve the purpose of improving the energy density and cycle performance of sodium-ion battery cells.

In the process of researching the improvement of the energy conversion efficiency of batteries such as sodium batteries, a composition of sodium-ion battery layered oxide positive electrode materials is provided. By physically mixing and blending at least two types of sodium-ion battery layered oxide positive electrode materials to form the composition of the sodium-ion battery layered oxide positive electrode materials, and regulating the types and contents of the transition metal elements in the composition, after the composition is used in a battery cell, the composition is found to be able to significantly improve the impedance of the battery cell. For example, the composition can significantly improve the direct current resistance (DCR) stability of the battery cell during charging and discharging processes, and reduce the increase rate of the DCR of the battery cell during the charging and discharging processes, thereby improving the energy

conversion efficiency of the battery cell. On this basis, the electrochemical performance, such as the energy density and the cycle performance, of the battery cell can also be improved. Based on the above research, the embodiments of the present application provide the following technical solutions.

**Positive Electrode Material Composition**

In a first aspect, the embodiments of the present application provide a positive electrode material composition. In some embodiments, the positive electrode material composition of the embodiments of the present application includes at least two nickel-iron-manganese-based sodium-ion battery positive electrode active materials, and the nickel-iron-manganese-based sodium-ion battery positive electrode active materials are physically mixed; a mixture formed by the nickel-iron-manganese-based sodium-ion battery positive electrode active materials further includes a Cu element and a Q element. Moreover, in a unit molar amount of the positive electrode material composition, contents of the Na element, the Ni element, the Mn element, the Fe element, the Cu element, and the Q element are respectively as follows.

A total molar content of Na is 0.78-1 mol.

A total molar content of Ni is 0.12-0.38 mol.

A total molar content of Mn is 0.18-0.48 mol.

A total molar content of Fe is 0.18-0.35 mol.

A total molar content of Q is 0.01-0.12 mol.

A total molar content of Cu is 0.01-0.14 mol.

The Q includes at least one of a Zn element, an Mg element, and a Ti element.

In the positive electrode material composition of the embodiments of the present application, the nickel-iron-manganese-based sodium-ion battery positive electrode active material refers to a sodium-ion battery layered oxide positive electrode material including a nickel element, an iron element, and a manganese element. The sodium-ion battery layered oxide positive electrode material refers to a positive electrode material composed of alternately arranged transition metal layers ($TMO_6$) including Ni, Mn, Fe, etc., and sodium layers ($NaO_6$). Physical mixing refers to physically intermixing at least two of the above-mentioned nickel-iron-manganese-based sodium-ion battery positive electrode active materials without crystal phase doping, such as not being subjected to a treatment, such as a sintering treatment, after the intermixing.

In the positive electrode material composition of the embodiments of the present application, two or more nickel-iron-manganese-based sodium-ion battery positive electrode active materials are physically mixed, and contents of metal elements such as the Na element, the Ni element, the Mn element, the Fe element, the Cu element, and the Q element included in the mixture are controlled to be within the above ranges, such that the DCR of the battery cell including the positive electrode material composition of the embodiments of the present application is enabled to be relatively stable during the charging and discharging processes, and the DCR growth rate of the battery cell during the charging and discharging processes can be significantly reduced. The Cu element and the metal element represented by Q with contents in the above ranges can provide a synergistic effect on the DCR stability of the battery cell in the electrode material composition, and can significantly improve the DCR stability of the battery cell.

On this basis, since at least one nickel-iron-manganese-based sodium-ion battery positive electrode active material includes the Cu element and the Q element in the above molar content ranges, the Cu element and the Q element participate in the disordered arrangement among the metal elements in the transition metal layer included in the nickel-iron-manganese-based sodium-ion battery positive electrode active material and can adjust the spacing between the transition metal layer and the sodium layer, thereby improving the structural stability and/or full delivery of the specific capacity of the nickel-iron-manganese-based sodium-ion battery positive electrode active material during the sodium deintercalation and intercalation process, and improving the specific capacity and the cycle performance of the positive electrode material composition of the embodiments of the present application. Correspondingly, the energy density and the cycle performance of the battery cell are improved.

In some embodiments, in a unit molar amount of the positive electrode material composition, a total molar content of the Na element may be 0.78-1 mol, optionally 0.8-1 mol, and further 0.89-0.91 mol. In an exemplary embodiment, the total molar content of the Na element may be a typical but non-limiting stoichiometric content such as 0.78 mol, 0.8 mol, 0.82 mol, 0.85 mol, 0.88 mol, 0.89 mol, 0.9 mol, 0.91 mol, 0.92 mol, 0.95 mol, 0.98 mol, and 1.0 mol, or in a range between any two of the stoichiometric content values. The Na element in the content range improves the reversible capacity of the positive electrode material composition.

In some embodiments, in a unit molar amount of the positive electrode material composition, a total molar content of the Ni element may be 0.12-0.38 mol, optionally 0.15-0.35 mol, and further 0.2-0.3 mol. In an exemplary embodiment, the total molar content of the Ni element may be a typical but non-limiting stoichiometric content such as 0.12 mol, 0.15 mol, 0.18 mol, 0.20 mol, 0.22 mol, 0.25 mol, 0.28 mol, 0.30 mol, 0.32 mol, 0.35 mol, and 0.38 mol, or in a range between any two of the stoichiometric content values.

In some embodiments, in a unit molar amount of the positive electrode material composition, a total molar content

of the Fe element may be 0.18-0.35 mol, optionally 0.20-0.33 mol, and further 0.24-0.28 mol. In an exemplary embodiment, the total molar content of the Fe element may be a typical but non-limiting stoichiometric content such as 0.18 mol, 0.20 mol, 0.22 mol, 0.24 mol, 0.25 mol, 0.28 mol, 0.30 mol, 0.32 mol, and 0.33 mol, or in a range between any two of the stoichiometric content values.

At least one element of the Ni element and the Fe element in the above content ranges can, together with elements including at least one of the Cu element and the Q element in the above contents, the Mn element, and the like included in each nickel-iron-manganese-based sodium-ion battery positive electrode active material, participate in the disordered arrangement among the metal elements in the transition metal layer included in each nickel-iron-manganese-based sodium-ion battery positive electrode active material and can adjust the spacing between the transition metal layer and the sodium layer, thereby improving the relevant electrochemical performance of each nickel-iron-manganese-based sodium-ion battery positive electrode active material, further improving the DCR stability performance of the battery cell including the positive electrode material composition of the embodiments of the present application during the charging and discharging processes, and further alleviating the increase of the DCR of the battery cell during the charging and discharging processes. On this basis, the specific capacity of the nickel-iron-manganese-based sodium-ion battery positive electrode active material can also be improved to improve the specific capacity of the positive electrode material composition of the embodiments of the present application. Furthermore, the structural stability of the nickel-iron-manganese-based sodium-ion battery positive electrode active material during the sodium deintercalation and intercalation process can be improved, and the cycle performance of the positive electrode material composition of the embodiments of the present application can be improved.

In some embodiments, in a unit molar amount of the positive electrode material composition, a total molar content of the Mn element may be 0.18-0.48 mol, optionally 0.20-0.45 mol, and further 0.39-0.41 mol. In an exemplary embodiment, the total molar content of the Mn element may be a typical but non-limiting stoichiometric content such as 0.18 mol, 0.20 mol, 0.22 mol, 0.25 mol, 0.28 mol, 0.30 mol, 0.32 mol, 0.35 mol, 0.38 mol, 0.39 mol, 0.40 mol, 0.41 mol, 0.42 mol, 0.45 mol, and 0.48 mol, or in a range between any two of the stoichiometric content values. The Mn element in the content range can, together with elements including at least one of the Cu element or the Q element in the above contents, the Ni element, the Fe element, and the like included in each nickel-iron-manganese-based sodium-ion battery positive electrode active material, participate in the relevant electrochemical performance of each nickel-iron-manganese-based sodium-ion battery positive electrode active material, thereby further improving the DCR stability performance of the battery cell including the positive electrode material composition of the embodiments of the present application during the charging and discharging processes, and further alleviating the increase of the DCR of the battery cell during the charging and discharging processes. On this basis, the structural stability of each nickel-iron-manganese-based sodium-ion battery positive electrode active material during the sodium deintercalation and intercalation process is improved, and the cycle performance of each nickel-iron-manganese-based sodium-ion battery positive electrode active material is improved.

In some embodiments, in a unit molar amount of the positive electrode material composition, a total molar content of the Q element may be 0.01-0.12 mol, optionally 0.01-0.1 mol, and further 0.01-0.06 mol. In an exemplary embodiment, the total molar content of the Q element may be a typical but non-limiting stoichiometric content such as 0.01 mol, 0.02 mol, 0.03 mol, 0.04 mol, 0.05 mol, 0.06 mol, 0.07 mol, 0.08 mol, 0.09 mol, 0.10 mol, 0.11 mol, and 0.12 mol, or in a range between any two of the stoichiometric content values. When the nickel-iron-manganese-based sodium-ion battery positive electrode active material includes the Q element in the content range, the Q element can also participate in the disordered arrangement among the metal elements in the transition metal layer of the nickel-iron-manganese-based sodium-ion battery positive electrode active material including the Q element, and adjust the spacing between the transition metal layer and the sodium layer, thereby improving the relevant electrochemical performance of each nickel-iron-manganese-based sodium-ion battery positive electrode active material, and further improving the DCR stability performance of the battery cell including the positive electrode material composition of the embodiments of the present application during the charging and discharging processes, so as to alleviate the increase of the DCR of the battery cell during the charging and discharging processes. In addition, the metal element represented by Q in the above content range can further, together with the Cu element in the above content range, provide a synergistic effect on the DCR stability of the battery cell in the composition, and further improve the DCR stability of the battery cell.

Additionally, the full delivery of the specific capacity of the nickel-iron-manganese-based sodium-ion battery positive electrode active material including the Q element during the sodium deintercalation and intercalation process can also be further improved, thereby improving the specific capacity of the positive electrode material composition of the embodiments of the present application. Moreover, the migration of the Fe element occurring in the nickel-iron-manganese-based sodium-ion battery positive electrode active material including the Q element can be reduced, the structural stability of each nickel-iron-manganese-based sodium-ion battery positive electrode active material during the sodium deintercalation and intercalation process can be improved, and the cycle performance of the positive electrode material composition of the embodiments of the present application can be improved.

In some embodiments, in a unit molar amount of the positive electrode material composition, a total molar content of the Cu element may be 0.01-0.14 mol, optionally 0.01-0.12 mol, and further 0.02-0.09 mol or 0.02-0.07 mol. In an

exemplary embodiment, the total molar content of the Cu element may be a typical but non-limiting stoichiometric content such as 0.01 mol, 0.02 mol, 0.03 mol, 0.04 mol, 0.05 mol, 0.06 mol, 0.07 mol, 0.08 mol, 0.09 mol, 0.10 mol, 0.11 mol, 0.12 mol, 0.13 mol, and 0.14 mol, or in a range between any two of the stoichiometric content values. When the nickel-iron-manganese-based sodium-ion battery positive electrode active material includes the Cu element in the content range, the Cu element can also participate in the disordered arrangement among the metal elements in the transition metal layer of the nickel-iron-manganese-based sodium-ion battery positive electrode active material including the Cu element, and adjust the spacing between the transition metal layer and the sodium layer, which can also improve the relevant electrochemical performance of each nickel-iron-manganese-based sodium-ion battery positive electrode active material, thereby further improving the DCR stability performance of the battery cell including the positive electrode material composition of the embodiments of the present application during the charging and discharging processes, so as to alleviate the increase of the DCR of the battery cell during the charging and discharging processes. Similarly, the Cu element in the above content range can further, together with the metal element represented by Q in the above content range, provide a synergistic effect on the DCR stability of the battery cell in the composition, and further improve the DCR stability of the battery cell. Additionally, the structural stability of the nickel-iron-manganese-based sodium-ion battery positive electrode active material including the Cu element during the sodium deintercalation and intercalation process can also be further improved.

In some embodiments, at least one nickel-iron-manganese-based sodium-ion battery positive electrode active material included in the positive electrode material composition of the embodiments of the present application further includes an active and/or inert doping metal element. In a unit molar amount of the positive electrode material composition, a total molar content of the doping metal element is greater than 0 and less than or equal to 0.13 mol, optionally greater than 0 and less than or equal to 0.1 mol. In an exemplary embodiment, the total molar content of the doping metal element may be a typical but non-limiting stoichiometric content such as 0.01 mol, 0.02 mol, 0.03 mol, 0.04 mol, 0.05 mol, 0.06 mol, 0.07 mol, 0.08 mol, 0.09 mol, 0.10 mol, 0.11 mol, 0.12 mol, and 0.13 mol, or in a range between any two of the stoichiometric content values. The doping metal element in the content range can participate in the disordered arrangement among the metal elements in the transition metal layer included in the nickel-iron-manganese-based sodium-ion battery positive electrode active material including the doping metal element and can adjust the spacing between the transition metal layer and the sodium layer; the doping metal element in the content range, together with the above Ni element, Mn element, Fe element, or further at least one of the Cu element and the Q element, can also improve the relevant electrochemical performance of each nickel-iron-manganese-based sodium-ion battery positive electrode active material, thereby further improving the DCR stability performance of the battery cell including the positive electrode material composition of the embodiments of the present application during the charging and discharging processes, so as to alleviate the increase of the DCR of the battery cell during the charging and discharging processes. Additionally, according to the type of the doping metal element represented by R, the structural stability and/or the specific capacity delivery of the nickel-iron-manganese-based sodium-ion battery positive electrode active material including the doping metal element can also be further improved. When the doping metal element is an active doping metal element, the content of the Ni element may be reduced, thereby reducing the economic cost of the nickel-iron-manganese-based sodium-ion battery positive electrode active material including the doping metal element.

In the embodiments, the doping metal element may include at least one of V, Cr, Ca, Al, Sc, Sn, Sb, Zr, Nb, Ru, and Ir. The active doping metal element may include at least one metal element of V, Cr, Sc, Sn, Sb, Nb, Ca, and the like, and the inert doping metal element may include at least one metal element of Al, Zr, Ir, Ru, and the like. By incorporating these types of doping metal elements into the transition metal layer included in the nickel-iron-manganese-based sodium-ion battery positive electrode active material including doping metal elements, the disordered arrangement of the metal elements in the transition metal layer is adjusted, and the spacing between the transition metal layer and the sodium layer can also be adjusted, thereby further improving the DCR stability performance of the battery cell including the positive electrode material composition of the embodiments of the present application during the charging and discharging processes, so as to alleviate the increase of the DCR of the battery cell during the charging and discharging processes. In addition, according to the type of the doping metal element, for example, an inert doping metal element can also reduce the sensitivity to iron sites, and can assist the Mn element in further improving the structural stability of the nickel-iron-manganese-based sodium-ion battery positive electrode active material including the doping metal element during the sodium deintercalation and intercalation process, thereby further improving the cycle performance of the nickel-iron-manganese-based sodium-ion battery positive electrode active material including the doping metal element. For example, an active doping metal element can also, together with the Fe element, further improve the specific capacity of the nickel-iron-manganese-based sodium-ion battery positive electrode active material including the doping metal element, thereby correspondingly improving the energy density of the battery cell.

Based on the molar content ranges of at least one element of Cu and Q, as well as Na, Ni, Mn, Fe, or the further included doping metal element, included in a unit molar amount of the positive electrode material composition of the embodiments of the present application in the above embodiments, in some embodiments, in a unit molar amount of the positive electrode material composition, a total molar content of Na, Ni, Mn, Fe, Cu, Q, and the doping metal element may

be as follows.

The total molar content of Na is 0.8-1 mol.

The total molar content of Ni is 0.15-0.35 mol.

The total molar content of Mn is 0.20-0.45 mol.

The total molar content of Fe is 0.20-0.33 mol.

The total molar content of Q is 0.01-0.06 mol.

The total molar content of Cu is 0.02-0.09 mol.

A total molar content of the doping metal element is 0-0.13 mol, optionally 0-0.1 mol.

By selectively controlling the total molar content of the Na element, the Ni element, the Mn element, the Fe element, the Cu element, and the metal element represented by Q or the further doping metal element within the ranges, the disordered arrangement of the metal elements in the transition metal layer included in each nickel-iron-manganese-based sodium-ion battery positive electrode active material, as well as the spacing between the transition metal layer and the sodium layer can be further adjusted, thereby further improving the DCR stability performance of the battery cell including the positive electrode material composition of the embodiments of the present application during the charging and discharging processes. Additionally, the cycle performance and the specific capacity delivery of each nickel-iron-manganese-based sodium-ion battery positive electrode active material are further improved.

In some embodiments, in a unit molar amount of the positive electrode material composition, a ratio of a total molar content of the Na element to a total molar content of other metal elements in the positive electrode material composition of the embodiments of the present application in the above embodiments is (0.81-0.89):1, optionally (0.82-0.89):1. In an exemplary embodiment, the ratio may be a typical but non-limiting molar ratio such as 0.81:1, 0.82:1, 0.83:1, 0.84:1, 0.85:1, 0.86:1, 0.87:1, 0.88:1, and 0.89:1, or in a range between any two of the molar ratio values. Controlling the ratio of the total molar content of the Na element to the total molar content of the other metal elements within the range can further adjust the content of sodium ions, and increase the content of sodium ions that can be intercalated and deintercalated in the nickel-iron-manganese-based sodium-ion battery positive electrode active material, thereby improving the reversible capacity of the positive electrode material composition of the embodiments of the present application. Moreover, sodium ions in the content range can increase the O3 crystal phase content of each nickel-iron-manganese-based sodium-ion battery positive electrode active material, making each nickel-iron-manganese-based sodium-ion battery positive electrode active material mainly present an O3 crystal, thereby improving the structural stability of the nickel-iron-manganese-based sodium-ion battery positive electrode active material, so as to improve the cycle performance thereof.

In addition, the nickel-iron-manganese-based sodium-ion battery positive electrode active material included in the positive electrode material composition of the embodiments of the present application in the above embodiments is a sodium-ion battery layered oxide positive electrode material. Therefore, each nickel-iron-manganese-based sodium-ion battery positive electrode active material further includes oxygen atoms. The content of the oxygen atoms may be within a conventional content range for a sodium-ion battery layered oxide positive electrode material. Element types and contents in the positive electrode material composition and the nickel-iron-manganese-based sodium-ion battery positive electrode active material included therein in the above embodiments may all be measured by obtaining an inductively coupled plasma (ICP) optical emission spectrum using an Agilent ICP-OES730 described below.

In addition, a physical mixing ratio of the at least two nickel-iron-manganese-based sodium-ion battery positive electrode active materials included in the positive electrode material composition of the embodiments of the present application in the above embodiments may be adjusted according to the above total molar content ranges of the elements in a unit molar amount of the positive electrode material composition of the embodiments of the present application.

In some embodiments, the Cu element and the Q element included in the positive electrode material composition of the embodiments of the present application in the above embodiments are distributed in different nickel-iron-manganese-based sodium-ion battery positive electrode active materials. In this way, the nickel-iron-manganese-based sodium-ion battery positive electrode active material including the Cu element possesses relatively high structural stability during charging and discharging processes, thereby improving the cycle performance of the positive electrode material composition of the embodiments of the present application; the nickel-iron-manganese-based sodium-ion battery positive electrode active material including the Q element possesses relatively high specific capacity, thereby improving the specific capacity of the positive electrode material composition of the embodiments of the present application. Therefore, blending the nickel-iron-manganese-based sodium-ion battery positive electrode active material including the Cu element and the nickel-iron-manganese-based sodium-ion battery positive electrode active material including the Q element to form a mixture can balance the specific capacity and the cycle performance of the positive electrode material composition of the embodiments of the present application, thereby correspondingly balancing the energy density and the cycle performance of the battery electrical properties. Additionally, the DCR stability performance of the battery cell including the positive electrode material composition of the embodiments of the present application during the charging and discharging processes can be further improved, so as to alleviate the increase of the DCR of the battery cell during the charging and discharging processes.

Certainly, the above Cu element and the Q element may also be distributed in the same nickel-iron-manganese-based sodium-ion battery positive electrode active material.

In some embodiments, when the Cu element and the Q element are distributed in different nickel-iron-manganese-based sodium-ion battery positive electrode active materials, according to measurement, in the embodiments, a powder Dv50 particle size of the nickel-iron-manganese-based sodium-ion battery positive electrode active material including the Q element may be 3-8 μm, optionally 4-6.5 μm. In an exemplary embodiment, the Dv50 particle size may be a typical but non-limiting particle size such as 3 μm, 4 μm, 4.5 μm, 5 μm, 5.5 μm, 6 μm, 6.5 μm, 7 μm, 7.5 μm, and 8 μm, or in a range between any two of the particle size values. A Dv90 particle size of the nickel-iron-manganese-based sodium-ion battery positive electrode active material including the Q element may be 8-16 μm, optionally 10-14 μm. In an exemplary embodiment, the Dv90 particle size may be a typical but non-limiting particle size such as 8 μm, 9 μm, 10 μm, 11 μm, 12 μm, 13 μm, 14 μm, 15 μm, and 16 μm, or in a range between any two of the particle size values.

In the embodiments, a powder Dv50 particle size of the nickel-iron-manganese-based sodium-ion battery positive electrode active material including the Cu element may be 5-11 μm, optionally 6.5-10 μm. In an exemplary embodiment, the Dv50 particle size may be a typical but non-limiting particle size such as 5 μm, 5.5 μm, 6 μm, 6.5 μm, 7 μm, 7.5 μm, 8 μm, 8.5 μm, 9 μm, 9.5 μm, 10 μm, 10.5 μm, and 11 μm, or in a range between any two of the particle size values. A powder Dv90 particle size of the nickel-iron-manganese-based sodium-ion battery positive electrode active material including the Cu element may be 13-19 μm, optionally 14.5-18 μm. In an exemplary embodiment, the Dv90 particle size may be a typical but non-limiting particle size such as 13 μm, 14 μm, 14.5 μm, 15 μm, 16 μm, 17 μm, 18 μm, and 19 μm, or in a range between any two of the particle size values.

The Dv50 particle size refers to a corresponding particle size when a cumulative particle size distribution percentage in a powder of the nickel-iron-manganese-based sodium-ion battery positive electrode active material including the Q element or the Cu element reaches 50%. The Dv90 particle size refers to a corresponding particle size when a cumulative particle size distribution percentage in the powder of the nickel-iron-manganese-based sodium-ion battery positive electrode active material including the Q element or the Cu element reaches 90%. The Dv50 particle size and the Dv90 particle size of each nickel-iron-manganese-based sodium-ion battery positive electrode active material may be separately determined according to the method steps in GB/T 16418.

The Dv50 particle size and the Dv90 particle size in the above ranges can improve the blending effect between the nickel-iron-manganese-based sodium-ion battery positive electrode active material including the Q element and nickel-iron-manganese-based sodium-ion battery positive electrode active materials such as the nickel-iron-manganese-based sodium-ion battery positive electrode active material including the Cu element, thereby further improving the DCR stability performance of the battery cell including the positive electrode material composition of the embodiments of the present application during the charging and discharging processes, so as to alleviate the increase of the DCR of the battery cell during the charging and discharging processes. Additionally, a suitable specific surface area is provided, thereby improving the stability of a contact interface between a positive electrode plate and an electrolytic solution.

In some embodiments, when the Cu element and the Q element are distributed in different nickel-iron-manganese-based sodium-ion battery positive electrode active materials, in the embodiments, a specific surface area (BET) of particles of the nickel-iron-manganese-based sodium-ion battery positive electrode active material including the Q element is 0.4-1.0 $m^2/g$, optionally 0.6-0.9 $m^2/g$. In an exemplary embodiment, the specific surface area may be a typical but non-limiting specific surface area such as 0.4 $m^2/g$, 0.5 $m^2/g$, 0.6 $m^2/g$, 0.7 $m^2/g$, 0.8 $m^2/g$, 0.9 $m^2/g$, and 1.0 $m^2/g$, or in a range between any two of the specific surface area values.

In the embodiments, a specific surface area (BET) of particles of the nickel-iron-manganese-based sodium-ion battery positive electrode active material including the Cu element is 0.4-0.7 $m^2/g$, optionally 0.5-0.6 $m^2/g$. In an exemplary embodiment, the specific surface area may be a typical but non-limiting specific surface area such as 0.4 $m^2/g$, 0.5 $m^2/g$, 0.55 $m^2/g$, 0.6 $m^2/g$, and 0.7 $m^2/g$, or in a range between any two of the specific surface area values.

Specific surface areas of powders of the nickel-iron-manganese-based sodium-ion battery positive electrode active material including the Q element and the nickel-iron-manganese-based sodium-ion battery positive electrode active material including the Cu element within the ranges can improve performance such as the stability of the contact interface between the electrolytic solution and both the nickel-iron-manganese-based sodium-ion battery positive electrode active material including the Q element and the nickel-iron-manganese-based sodium-ion battery positive electrode active material including the Cu element, thereby further improving the DCR stability performance of the battery cell including the positive electrode material composition of the embodiments of the present application during the charging and discharging processes.

In some embodiments, when the Cu element and the Q element are distributed in different nickel-iron-manganese-based sodium-ion battery positive electrode active materials, in the embodiments, a compacted density of the powder of the nickel-iron-manganese-based sodium-ion battery positive electrode active material including the Q element under a pressure of 3 tons is higher than 3.1 $g/cm^3$, optionally 3.1-3.4 $g/cm^3$. In an exemplary embodiment, the compacted density under the pressure of 3 tons may be a typical but non-limiting compacted density such as 3.1 $g/cm^3$, 3.2 $g/cm^3$, 3.3 $g/cm^3$, and 3.4 $g/cm^3$, or in a range between any two of the compacted density values.

In the embodiments, a compacted density of the powder of the nickel-iron-manganese-based sodium-ion battery positive electrode active material including the Cu element under the pressure of 3 tons may be 3.0-3.3 g/cm$^3$, optionally 3.0-3.25 g/cm$^3$. In an exemplary embodiment, the compacted density under the pressure of 3 tons may be a typical but non-limiting compacted density such as 3 g/cm$^3$, 3.1 g/cm$^3$, 3.15 g/cm$^3$, 3.2 g/cm$^3$, 3.25 g/cm$^3$, and 3.3 g/cm$^3$, or in a range between any two of the compacted density values.

Specific surface areas of the powders of the nickel-iron-manganese-based sodium-ion battery positive electrode active material including the Q element and the nickel-iron-manganese-based sodium-ion battery positive electrode active material including the Cu element within the ranges can improve performance such as the stability of the contact interface between the electrolytic solution and both the nickel-iron-manganese-based sodium-ion battery positive electrode active material including the Q element and the nickel-iron-manganese-based sodium-ion battery positive electrode active material including the Cu element, thereby further improving the DCR stability performance of the battery cell including the positive electrode material composition of the embodiments of the present application during the charging and discharging processes. Additionally, the specific capacity of the battery including the nickel-iron-manganese-based sodium-ion battery positive electrode active material including the Q element and the nickel-iron-manganese-based sodium-ion battery positive electrode active material including the Cu element can be further improved.

In the above embodiments, the compacted density of the positive electrode material composition and the powder of each nickel-iron-manganese-based sodium-ion battery positive electrode active material included in the positive electrode material composition may be measured according to the following measurement method:

The measurement is performed with reference to the GB/T 24533-2019 standard test method. Specifically, reference may be made to the following test steps.

(1) Wipe upper and lower spacers, a top plunger, and a metal cylindrical sleeve of a compacted density meter with a clean soft cloth (tissue paper); if necessary, wipe with a soft cloth dipped in absolute ethanol before air drying.

(2) Place the spacers, the top plunger, the metal cylindrical sleeve, and a base plate in an order for testing onto a digital thickness gauge, and press a zero button.

(3) Remove the top plunger and the upper spacer, weigh 1 g of a sample of the nickel-iron-manganese-based sodium-ion battery positive electrode active material included in the above Examples A1 to A12 and Comparative Examples A1 to A2 into the sleeve, accurate to 0.0001 g, and record the weight as m.

(4) Slowly slide the spacer and the top plunger down into a bore separately, mount the spacer and the top plunger together with the base plate on the compacted density meter, and tighten a pressure control knob.

(5) Pump a pressure lever, and simultaneously observe a value on a digital pressure gauge on the compacted density meter; after a specified value of 2200 Ib is reached, start a stopwatch. After 30 seconds, loosen the pressure control knob to remove pressure, and when the base plate descends to a certain height, re-tighten the pressure control knob.

(6) Remove the top plunger, the sleeve, and the lower spacer together with the bottom plate, place the removed components on the digital thickness gauge, read a value on the digital thickness gauge within 10 seconds, and record the value as H;

$$r = 10m / (S \times H);$$

then calculate a powder compacted density r of the sample according to the above formula r = 10m / (S × H).

Where, mm represents the sample weight, in grams (g); HH represents the thickness of the sample after compaction, in millimeters (mm); SS represents the cross-sectional area of the top plunger, in square centimeters (cm$^2$).

In some embodiments, the at least two nickel-iron-manganese-based sodium-ion battery positive electrode active materials included in the positive electrode material composition of the embodiments of the present application in the above embodiments may be physically mixed according to a molar ratio of the nickel-iron-manganese-based sodium-ion battery positive electrode active material including the Cu element to the nickel-iron-manganese-based sodium-ion battery positive electrode active material including the Q element, which is (0.5-28):1, optionally (0.5-18):1. In an exemplary embodiment, the molar ratio may be a typical but non-limiting molar ratio such as 0.5:1, 1:1, 3:1, 5:1, 8:1, 10:1, 13:1, 15:1, 18:1, 20:1, 23:1, 25:1, and 28:1, or in a range between any two of the molar ratios. In the embodiments, when the Cu element and the Q element are distributed in different nickel-iron-manganese-based sodium-ion battery

positive electrode active materials, a ratio of total moles of the nickel-iron-manganese-based sodium-ion battery positive electrode active material including the Cu element to total moles of the nickel-iron-manganese-based sodium-ion battery positive electrode active material including the Q element is within the above physical mixing molar ratio range.

By controlling the physical mixing molar ratio of the at least two nickel-iron-manganese-based sodium-ion battery positive electrode active materials within the above range, the blending effect among the nickel-iron-manganese-based sodium-ion battery positive electrode active materials can be fully utilized, thereby improving the DCR stability performance of the battery cell including the positive electrode material composition of the embodiments of the present application during the charging and discharging processes. Additionally, the specific capacity and the cycle performance of the battery including the positive electrode material composition of the embodiments of the present application can be further balanced, thereby improving the energy density and the cycle performance of the corresponding battery cell.

In some embodiments, the nickel-iron-manganese-based sodium-ion battery positive electrode active material included in the positive electrode material composition of the embodiments of the present application in the above embodiments is selected to be an O3 phase layered metal oxide. The O3 phase layered metal oxide refers to a type of layered oxide having a crystal structure in which the included oxygen is stacked in an ABCABC-type manner. In the embodiments, the nickel-iron-manganese-based sodium-ion battery positive electrode active material included in the positive electrode material composition of the embodiments of the present application in the above embodiments is mainly an O3 crystal phase, and a weight content of the O3 crystal phase in each nickel-iron-manganese-based sodium-ion battery positive electrode active material may be 95% or more, further 98% or more, and may also reach 100%. A higher weight proportion of the O3 crystal phase in each nickel-iron-manganese-based sodium-ion battery positive electrode active material is more desirable. The O3 crystal phase included in each nickel-iron-manganese-based sodium-ion battery positive electrode active material enables each nickel-iron-manganese-based sodium-ion battery positive electrode active material to possess relatively high structural stability, such as relatively high structural stability relative to a P2 phase layered metal oxide, and higher cycle performance, and can also further improve the DCR stability performance of the battery cell including the positive electrode material composition of the embodiments of the present application during the charging and discharging processes.

In some embodiments, according to electron microscope analysis, crystals of each nickel-iron-manganese-based sodium-ion battery positive electrode active material include single crystals, and the single crystals are block-like.

Based on the element types, contents, and mixing ratios, as well as the morphology, crystal form, particle size, and the like in the nickel-iron-manganese-based sodium-ion battery positive electrode active material included in the positive electrode material composition of the embodiments of the present application in the above embodiments, according to measurement, in some embodiments, the discharge specific capacity of the positive electrode material composition of the embodiments of the present application in the above embodiments at 1.5-4.2 V and 0.1 C can reach 115-128 mAh/g, optionally 120-128 mAh/g.

Specifically, the charge specific capacity and the discharge specific capacity of the positive electrode material composition of the embodiments of the present application described above are obtained by preparing the positive electrode material composition of the embodiments of the present application into a positive electrode, and assembling the positive electrode and a negative electrode separately into a sodium-ion coin battery. Moreover, the specific capacity of the sodium-ion coin battery is measured.

In the embodiments, the sodium-ion coin battery used for measuring the charge specific capacity and the discharge specific capacity of the positive electrode material composition of the embodiments of the present application was assembled according to the following method.

Positive electrode plate: The positive electrode material composition of the embodiments of the present application was used as a positive electrode active material, and the positive electrode active material was thoroughly stirred and mixed with conductive agent carbon nanotubes, conductive agent carbon black, and binder polyvinylidene fluoride (PVDF) in an appropriate amount of solvent NMP at a weight ratio of 95:0.5:2:2.5 to form a uniform positive electrode slurry; the positive electrode slurry was uniformly coated on a surface of a 13 μm positive electrode current collector aluminum foil, and after drying and cold pressing, the positive electrode plate was obtained.

Negative electrode plate: Hard carbon, a conductive agent SP, and a CMC binder were added to deionized water at a weight ratio of 8:1:1 and thoroughly stirred and mixed to form a uniform negative electrode slurry; the electrode slurry was uniformly coated on a surface of a 6 μm copper foil, and after drying and cold pressing, the negative electrode plate was obtained.

Electrolytic solution: 1M $NaPF_6$ / (EC/DEC, volume ratio 1:1).

Separator: Glass fiber.

Assembly of sodium-ion coin battery: The positive electrode plate, the glass fiber film, and the negative electrode plate were stacked in sequence, and after assembly, a coin battery assembly was formed; the electrode assembly was placed into a packaging casing, 1M $NaPF_6$ / (EC/DEC, volume ratio 1:1) electrolytic solution was added, and after processes such as packaging, formation, and standing, the sodium-ion coin battery was obtained.

**Preparation Method for Positive Electrode Material Composition**

In a second aspect, the embodiments of the present application provide a preparation method for the positive electrode material composition of the embodiments of the present application described above. In some embodiments, the preparation method for the positive electrode material composition of the embodiments of the present application includes the following steps.

In S10, at least two nickel-iron-manganese-based sodium-ion battery positive electrode active materials are physically mixed according to a molar content ratio of Na, Ni, Mn, Fe, Q, and Cu included in a unit molar amount of the positive electrode material composition, to form the positive electrode material composition.

In step S10 of the preparation method for the positive electrode material composition of the embodiments of the present application, the nickel-iron-manganese-based sodium-ion battery positive electrode active material is the nickel-iron-manganese-based sodium-ion battery positive electrode active material included in the positive electrode material composition of the embodiments of the present application described above; therefore, the physical mixing of the at least two nickel-iron-manganese-based sodium-ion battery positive electrode active materials also refers to a physical intermixing without crystal phase doping. The mixing ratio of the at least two nickel-iron-manganese-based sodium-ion battery positive electrode active materials needs to satisfy that in a unit molar amount of the positive electrode material composition of the embodiments of the present application described above, contents of the Na element, the Ni element, the Mn element, the Fe element, the Cu element, and the Q element satisfy the ranges described above, which are specifically as follows:

A total molar content of Na is 0.78-1 mol, optionally 0.8-1 mol.

A total molar content of Ni is 0.12-0.38 mol, optionally 0.15-0.35 mol.

A total molar content of Mn is 0.18-0.48 mol, optionally 0.20-0.45 mol.

A total molar content of Fe is 0.18-0.35 mol, optionally 0.20-0.33 mol.

A total molar content of Q is 0.01-0.12 mol, optionally 0.01-0.1 mol.

A total molar content of Cu is 0.01-0.14 mol, optionally 0.01-0.12 mol.

In this way, by mixing the at least two nickel-iron-manganese-based sodium-ion battery positive electrode active materials according to the ratio of the content ranges of the Na element, the Ni element, the Mn element, the Fe element, the Cu element, and the Q element, the preparation method for the positive electrode material composition of the embodiments of the present application enables the DCR of the battery cell including the positive electrode material composition of the embodiments of the present application to be relatively stable during the charging and discharging processes, and can significantly reduce the DCR growth rate of the battery cell during the charging and discharging processes. The method also enables the positive electrode material composition of the embodiments of the present application to possess high specific capacity and cycle performance.

The nickel-iron-manganese-based sodium-ion battery positive electrode active material of step S10 may be an obtained existing nickel-iron-manganese-based sodium-ion battery positive electrode active material, and certainly, may also be a nickel-iron-manganese-based sodium-ion battery positive electrode active material improved according to the types and contents of the elements included in the positive electrode material composition of the embodiments of the present application.

In some embodiments, the nickel-iron-manganese-based sodium-ion battery positive electrode active material in step S10 may be prepared according to the following method.

In S11, a precursor of each nickel-iron-manganese-based sodium-ion battery positive electrode active material is separately provided according to an element ratio included in each nickel-iron-manganese-based sodium-ion battery positive electrode active material.

In S12, a sintering treatment is separately performed on each nickel-iron-manganese-based sodium-ion battery positive electrode active material, to separately obtain each nickel-iron-manganese-based sodium-ion battery positive electrode active material.

In step S11 of the preparation method for the positive electrode material composition of the embodiments of the present application, the precursor of the nickel-iron-manganese-based sodium-ion battery positive electrode active material may be a proportional mixture including a sodium source, a nickel source, a manganese source, an iron source, and further including a copper source and a source of the metal element represented by Q, or further including the doping metal source included in the nickel-iron-manganese-based sodium-ion battery positive electrode active material in the positive electrode material composition of the embodiments of the present application described above.

As in the embodiments, the precursor of the nickel-iron-manganese-based sodium-ion battery positive electrode active material may be a precursor of a nickel-iron-manganese-based sodium-ion battery positive electrode active material prepared by a solid-phase method or a precipitation method.

When the precursor of the nickel-iron-manganese-based sodium-ion battery positive electrode active material is prepared by the solid-phase method, in the embodiments, the precursor of the nickel-iron-manganese-based sodium-ion battery positive electrode active material may be prepared according to a method including the following steps.

In step S111, a solid-phase mixing treatment is performed on the sodium source, the nickel source, the manganese source, the iron source, and at least one of the copper source and the source of the metal element represented by Q, or further the doping element source, according to a stoichiometric ratio of the elements in the nickel-iron-manganese-based sodium-ion battery positive electrode active material, to obtain the precursor of the nickel-iron-manganese-based sodium-ion battery positive electrode active material.

When the precursor of the nickel-iron-manganese-based sodium-ion battery positive electrode active material is prepared by the solid-phase method, the solid-phase mixing treatment is relative to liquid-phase mixing, and generally refers to not adding a solvent, such as not adding water, during a mixing treatment process, that is, performing a dry mixing treatment on the solid of each source in step S111 under a solvent-free condition.

In order to improve the uniform mixing of each source in step S111 during the solid-phase mixing treatment process, in the embodiments, a mixing treatment may be performed first on other source compounds except the sodium source in step S111, and then the sodium source is added to perform a mixing treatment again, thereby improving the mixing uniformity of each source and improving the safety of the solid-phase mixing treatment.

In the embodiments, the solid-phase mixing treatment may include, but is not limited to, a ball milling treatment, and any method capable of improving the uniform mixing of each source compound in step S111 falls within the scope disclosed by the embodiments of the present application. In the embodiments, when the mixing treatment is the ball milling treatment, a rate of the ball milling may be controlled to be 300-1000 rpm, optionally 400-600 rpm; a time of the ball milling treatment may be 1-6 h, optionally 2-4 h. By means of the ball milling treatment, the mixing uniformity of each source can be improved, thereby ultimately improving the stability of structures and electrochemical performance of the nickel-iron-manganese-based sodium-ion battery positive electrode active material in step S12.

In an exemplary embodiment, the sodium source may be a sodium salt, which may include at least one of sodium carbonate, sodium hydroxide, and the like.

In an exemplary embodiment, the nickel source may be a soluble or insoluble nickel compound, such as nickel oxide (NiO) or a nickel salt. The nickel salt may include at least one of nickel nitrate, nickel carbonate, nickel hydroxide, nickel sulfate, and the like.

In an exemplary embodiment, the manganese source may be a soluble or insoluble manganese compound, such as manganese oxide ($Mn_2O_3$) or a manganese salt. The manganese salt may include at least one of manganese nitrate, manganese carbonate, manganese hydroxide, manganese sulfate, and the like.

In an exemplary embodiment, the iron source may be a soluble or insoluble iron compound, such as an iron oxide (e.g., $Fe_2O_3$) or an iron salt. The iron salt may include at least one of iron nitrate, iron carbonate, iron hydroxide, iron sulfate, and the like.

In an exemplary embodiment, the copper source may be a soluble or insoluble copper compound, such as a copper oxide (e.g., CuO) or a copper salt. The copper salt may include at least one of copper nitrate, copper carbonate, copper hydroxide, copper sulfate, and the like.

In an exemplary embodiment, the source of the metal element represented by Q and the doping metal element source may be soluble or insoluble compounds of the metal element represented by Q and the doping metal element, such as oxides of the metal element represented by Q and the doping metal element or salts of the metal element represented by Q and the doping metal element. The salts of the metal element represented by Q and the doping metal element may include at least one of nitrate, carbonate, hydroxide, sulfate, and the like of the metal element represented by Q and the doping metal element.

The types of the sodium source, the nickel source, the manganese source, the iron source, the copper source, the source of the metal element represented by Q, and the doping metal element source can be effectively mixed uniformly during the mixing treatment process, thereby improving the structural and chemical stability of the nickel-iron-manganese-based sodium-ion battery positive electrode active material separately generated by each precursor of the nickel-iron-manganese-based sodium-ion battery positive electrode active material.

When the precursor of the nickel-iron-manganese-based sodium-ion battery positive electrode active material is prepared by the precipitation method, the precursor may be prepared according to a method including the following steps.

In step S113, a mixed solution of a soluble nickel source, a soluble manganese source, a soluble iron source, and at least one of the copper source and the source of the metal element represented by Q, or further the doping element source is prepared according to a stoichiometric ratio of the elements in the nickel-iron-manganese-based sodium-ion battery positive electrode active material, and then at least one of a precipitant and a complexing agent is added to perform a co-precipitation treatment to obtain a precipitated mixture.

In step S114, a mixing treatment is performed on the precipitated mixture and the sodium source to obtain the precursor of the nickel-iron-manganese-based sodium-ion battery positive electrode active material.

In step S113, at least one of the precipitant and the complexing agent should be a compound capable of causing the precipitation of the nickel element, the manganese element, the iron element, the copper element, the metal element represented by Q, and the doping metal element in the nickel source, the soluble manganese source, the soluble iron source, the soluble copper source, the source of the metal element represented by Q, and the doping element source. The

precipitant and the complexing agent in step S113 may be the same or different. As in the embodiments, the precipitant may include at least one of a hydroxide, a carbonate, and the like of an alkali metal. In the embodiments, the complexing agent may include an inorganic or organic complexing agent. In an exemplary embodiment, the inorganic complexing agent may include at least one of ammonium hydroxide, ammonium bicarbonate, ammonium sulfate, ammonium carbonate, and the like; the organic complexing agent may include at least one of citric acid, tartaric acid, disodium ethylenediaminetetraacetate, ethylenediaminetetraacetic acid (EDTA), nitrilotriacetic acid (NTA), and the like.

These types of precipitants and complexing agents can effectively precipitate the nickel element, the manganese element, the iron element, the copper element, the metal element represented by Q, and the doping element.

In the embodiments, at least one of the precipitant and the complexing agent should be in excess relative to the total amount of metal elements, such as the total molar amount, included in the mixed solution, to ensure that all the metal elements included in the mixed solution are fully precipitated, thereby improving the precision of the stoichiometric ratio of the metal elements included in the precursor of the nickel-iron-manganese-based sodium-ion battery positive electrode active material.

In an exemplary embodiment, the soluble nickel source may include at least one of nickel acetate, nickel chloride, nickel nitrate, nickel sulfate, and the like.

In an exemplary embodiment, the soluble manganese source may include at least one of manganese nitrate, manganese sulfate, a halide, and the like.

In an exemplary embodiment, the soluble iron source may include at least one of iron nitrate, manganese sulfate, a halide, and the like.

In an exemplary embodiment, the soluble copper source may include at least one of iron nitrate, manganese sulfate, a halide, and the like.

In an exemplary embodiment, the soluble source of the metal element represented by Q and the soluble doping metal element source may include at least one of nitrate of the metal element represented by Q and the doping metal element, manganese sulfate, a halide, and the like.

The soluble nickel source, the soluble manganese source, the soluble iron source, the soluble copper source, the soluble source of the metal element represented by Q, and the soluble doping element source all exhibit good solubility, thereby enabling quantitative control of the stoichiometric ratio of each metal element in the precipitated mixture.

The mixing ratio between the sodium source and the precipitated mixture in step S114 should satisfy the content of the sodium ions in the nickel-iron-manganese-based sodium-ion battery positive electrode active material, that is, the sodium-ion battery layered oxide, specifically, such as the stoichiometric ratio required for the sodium element in an O3 crystal phase layered oxide. The mixing treatment may be a solid-phase mixing treatment or involve mixing the soluble sodium source with the precipitated mixture after the soluble sodium source is dissolved, and then removing the solvent.

In addition, the sodium source in step S114 may be a sodium salt, which may include at least one of sodium carbonate, sodium hydroxide, and the like.

Step S12:

In step S12, after a sintering treatment is separately performed on the precursors of the at least two nickel-iron-manganese-based sodium-ion battery positive electrode active materials from step S11, each nickel-iron-manganese-based sodium-ion battery positive electrode active material is separately generated. It has been found in research that sintering treatment conditions have a certain influence on the structural stability and electrochemical performance of the generated nickel-iron-manganese-based sodium-ion battery positive electrode active material. In some embodiments, a temperature of the sintering treatment may be controlled at 700-980 °C, optionally 750-950 °C; in an exemplary embodiment, the temperature may be a typical but non-limiting temperature such as 700 °C, 750 °C, 800 °C, 850 °C, 900 °C, 950 °C, and 980 °C, or in a range between any two of the temperature values.

At the above sintering temperature, a time of the sintering treatment may be 4-20 h, optionally 6-12 h; in an exemplary embodiment, the time may be a typical but non-limiting hour such as 4 h, 5 h, 8 h, 10 h, 12 h, 15 h, 18 h, and 20 h, or in a range between any two of the hours.

The stabilization and the time of the sintering treatment are controlled within the above ranges, such that the precursor of each nickel-iron-manganese-based sodium-ion battery positive electrode active material in step S11 can be reacted to separately generate each nickel-iron-manganese-based sodium-ion battery positive electrode active material, thereby further improving the synergistic effect after the nickel-iron-manganese-based sodium-ion battery positive electrode active materials are physically mixed and blended, further improving the DCR stability of the battery cell including the positive electrode material composition of the embodiments of the present application during the charging and discharging processes, and also improving the electrochemical performance, such as the energy density and the cycle performance, of the battery cell.

In the embodiments, the temperature may be raised to the temperature of the sintering treatment at a heating rate of 2-20 °C/min. The heating rate may be further controlled to be 5-15 °C/min; in an exemplary embodiment, the heating rate

may be a typical but non-limiting rate such as 2 °C/min, 4 °C/min, 5 °C/min, 6 °C/min, 8 °C/min, 10 °C/min, 12 °C/min, 15 °C/min, 17 °C/min, 18 °C/min, and 20 °C/min, or in a range between any two of the rate values. By controlling the heating rate of the sintering treatment, such as controlling the heating rate within the heating rate range, the crystal perfection and integrity, such as the crystal morphology uniformity, of each nickel-iron-manganese-based sodium-ion battery positive electrode active material can be improved.

In addition, the sintering treatment in the above step S12 should be understood to be performed in an oxygen-including environment. As in the embodiments, the sintering treatment may be performed in air or in an oxygen-including protective atmosphere, such as in an oxygen-including nitrogen gas or an inert gas.

## Positive Electrode

In a third aspect, the embodiments of the present application provide a positive electrode. In some embodiments, the positive electrode according to the embodiments of the present application includes a current collector and a positive electrode active substance layer. The positive electrode active substance layer is bonded to the current collector, and the positive electrode active substance layer includes the positive electrode material composition of the embodiments of the present application described above.

In the positive electrode of the embodiments of the present application, the current collector refers to a structure for collecting current and transporting electrons. The positive electrode active substance layer refers to a layer structure including a positive electrode active material, and the positive electrode active material is a key substance participating in battery chemical reactions in the positive electrode. The positive electrode active material includes the positive electrode material composition of the embodiments of the present application described above. The positive electrode active substance layer being bonded to the current collector refers to the positive electrode active substance layer being bonded at least to a surface of the current collector. In addition, the positive electrode may be an electrode plate, and the electrode plate refers to the positive electrode having a sheet-like morphology. Certainly, the positive electrode may also be configured into other morphologies as needed.

Because the positive electrode active substance layer of the positive electrode of the embodiments of the present application includes the positive electrode material composition of the embodiments of the present application, according to measurement, the DCR of the battery cell including the positive electrode of the embodiments of the present application is relatively stable during the charging and discharging processes, and the DCR growth rate of the battery cell during the charging and discharging processes can be significantly reduced. Additionally, the energy density of the battery cell is high, and the cycle performance of the battery cell is good.

In the embodiments, the current collector included in the positive electrode of the embodiments of the present application includes, but is not limited to, a metal current collector, a carbon current collector, a conductive resin current collector, and a composite current collector of metal and resin, and more specifically, for example, aluminum, copper, nickel, titanium, iron, and respective alloys thereof, stainless steel, carbon fiber, carbon nanotubes (CNTs), and graphite. In the embodiments, the current collector may also be a dense film layer, or may be a film layer having a porous structure. In the embodiments, the current collector may be, but is not limited to, an aluminum foil or a porous aluminum foil.

In the embodiments, the positive electrode active substance layer included in the positive electrode of the embodiments of the present application being bonded to the current collector may refer to the positive electrode active substance layer being at least stacked on the surface of the current collector. When a surface layer of the current collector includes a porous structure or the current collector per se has a porous structure, the positive electrode active substance layer may be at least partially embedded into the current collector.

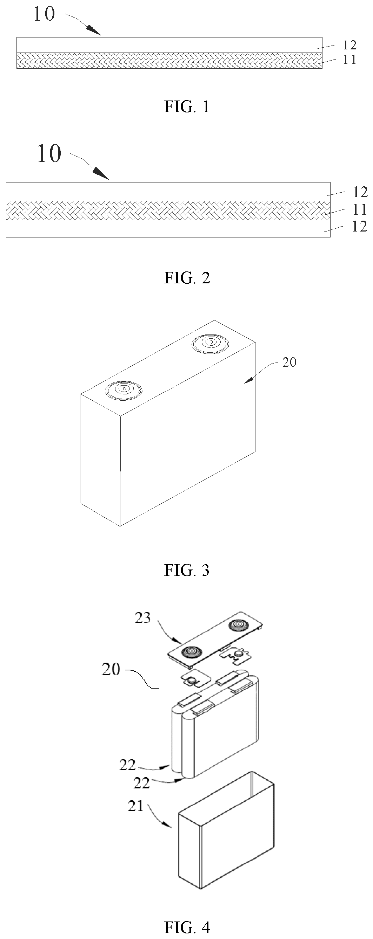

In some embodiments, the positive electrode active substance layer being bonded at least to the surface of the current collector may refer to the structure as shown in FIG. 1; the positive electrode active substance layer 12 is stacked on one surface of the current collector 11. When the surface of the current collector 11 has a porous structure or the current collector 11 as a whole has a porous structure, in addition to being stacked and bonded on the surface of the current collector 11, the positive electrode active substance layer 12 may further extend into the porous structure of the current collector 11.

In other embodiments, the positive electrode active substance layer being bonded to at least the surface of the current collector may refer to the structure as shown in FIG. 2; the current collector 11 has two oppositely disposed surfaces, and the positive electrode active substance layer 12 is stacked on the two oppositely disposed surfaces of the current collector 11. When at least one surface of the two surfaces of the current collector 11 has a porous structure or the current collector 11 as a whole has a porous structure, in addition to being stacked and bonded on the two surfaces of the current collector 11, the positive electrode active substance layer 12 may further extend into the porous structure of the current collector 11.

As an embodiment of the present application, in the positive electrode active substance layer described above, a mass content of a total mass of the positive electrode material composition of the embodiments of the present application described above in the positive electrode active substance layer may be 90-97%, optionally 94-96.5%. In an exemplary

embodiment, the mass content may be a typical but non-limiting content such as 90%, 91%, 92%, 93%, 94%, 95%, 96%, and 97%, or in a range between any two of the content values. The positive electrode material composition within the content range can effectively improve the energy density of the positive electrode and exhibits good cycle performance.

In addition to including the positive electrode active material component described above, the positive electrode active substance layer included in the positive electrode of the embodiments of the present application described above generally further includes components such as a binder and a conductive agent. The binder can enhance the mechanical properties of the positive electrode active substance layer per se and between the positive electrode active substance layer and the current collector. The conductive agent can effectively improve the conductivity of the positive electrode, such as reducing the resistance of the positive electrode.

In the embodiments, a mass content of the binder included in the positive electrode active substance layer may be 0.5-5%, optionally 1-3%. In an exemplary embodiment, the mass content may be a typical but non-limiting content such as 0.5%, 0.8%, 1%, 1.3%, 1.5%, 1.8%, 2%, 2.3%, 2.5%, 2.8%, 3%, 3.5%, 4%, 4.5%, and 5%, or in a range between any two of the content values.

In the embodiments, the binder may include one or more of an oil-soluble binder, a water-soluble binder, an emulsion-type binder, and the like. In an exemplary embodiment, the oil-soluble binder may include one or more of polyvinylidene fluoride, polyimide, polytetrafluoroethylene, polybutyl acrylate, polyacrylonitrile, and the like; in an exemplary embodiment, the water-soluble binder may include one or more of carboxymethylcellulose, carboxymethylcellulose salts, polyacrylic acid, polyacrylate, polyvinyl alcohol, sodium alginate, cyclodextrin, and the like; in an exemplary embodiment, the emulsion-type binder includes one or more of styrene-butadiene rubber, vinyl acetate resins, acrylic resins, and chlorinated rubber.

The binder within the content range and of the types described above can effectively enhance the mechanical property of the positive electrode active substance layer and the bonding strength between the positive electrode active substance layer and the current collector, thereby effectively improving the cycle performance of the positive electrode.

In the embodiments, a mass content of the conductive agent included in the positive electrode active substance layer may be 0.5-5%, optionally 1-3%. In an exemplary embodiment, the mass content may be a typical but non-limiting content such as 0.5%, 0.8%, 1%, 1.3%, 1.5%, 1.8%, 2%, 2.3%, 2.5%, 2.8%, 3%, 3.5%, 4%, 4.5%, and 5%, or in a range between any two of the content values.

In the embodiments, the conductive agent may include at least one of a particulate conductive agent, a linear conductive agent, and the like. The particulate conductive agent may include one or more of acetylene black (SP), conductive carbon black (super-P), Ketjen black, graphene, and the like. The linear conductive agent may include one or more of a carbon nanotube, a carbon fiber, a conductive oxide nanowire, and the like. The particulate conductive agent is relative to the linear conductive agent, and is a conductive agent having a non-linear particulate morphology. The linear conductive agent refers to a conductive agent having a one-dimensional fibrous morphology.

The conductive agent within the content range and of the types described above can effectively improve the conductivity of the positive electrode active substance layer.

In the embodiments, the conductive agent included in the positive electrode active substance layer in the positive electrode of the embodiments described above includes a linear conductive agent and a particulate conductive agent. A mass content of the linear conductive agent in the positive electrode active substance layer is 0.1-2.5%, optionally 0.3-0.7%. In an exemplary embodiment, the mass content may be a typical but non-limiting content such as 0.1%, 0.2%, 0.3%, 0.4%, 0.5%, 0.6%, 0.7%, 0.8%, 1%, 1.3%, 1.5%, 1.8%, 2%, 2.3%, and 2.5%, or in a range between any two of the content values. Because the crystals of the nickel-iron-manganese-based sodium-ion battery positive electrode active material included in the positive electrode material composition of the embodiments of the present application described above include single crystals, and the morphology of the single crystals is block-like, adding the linear conductive agent to the positive electrode active substance layer and controlling the content of the linear conductive agent within the range enable the linear conductive agent to form an abundant conductive network structure in the positive electrode active substance layer, and the linear conductive agent may also wrap around the surfaces of the block-like single crystal particles. The particulate conductive agent can be effectively dispersed in the interstices of the positive electrode material composition. In this way, the linear conductive agent constructs a long-range conductive network structure in the positive electrode active substance layer, and the particulate conductive agent constitutes a short-range conductive structure. Therefore, the synergistic conductive effect achieved by the linear conductive agent and the particulate conductive agent in the positive electrode active substance layer effectively improves the conductivity of the positive electrode active substance layer, can significantly reduce the internal resistance of the positive electrode, and is also conducive to improving the DCR stability of the battery electrical properties during the charging and discharging processes.

In the embodiments, an aspect ratio of the linear conductive agent may be selectively controlled to be (40-3000):1, optionally (50-2500):1. In an exemplary embodiment, the aspect ratio may be a typical but non-limiting aspect ratio such as 40:1, 50:1, 100:1, 500:1, 1000:1, 1500:1, 2000:1, 2500:1, and 3000:1, or in a range between any two of the aspect ratio values. The aspect ratio refers to a ratio of a length to a diameter of the linear conductive agent.

In further embodiments, the length of the linear conductive agent may be selectively controlled to be 0.5-5 μm,

optionally 0.5-2 μm. In an exemplary embodiment, the length may be a typical but non-limiting length such as 0.5 μm, 1 μm, 1.5 μm, 2 μm, 3 μm, 3.5 μm, 4 μm, 4.5 μm, and 5 μm, or in a range between any two of the length values.

In further embodiments, the diameter of the linear conductive agent may be selectively controlled to be 2-10 nm, optionally 3-7 nm. In an exemplary embodiment, the diameter may be a typical but non-limiting diameter such as 2 nm, 3 nm, 4 nm, 5 nm, 6 nm, 7 nm, 8 nm, 9 nm, and 10 nm, or in a range between any two of the diameter values.

The aspect ratio of the linear conductive agent is selectively controlled within the range described above, or the length and the diameter of the linear conductive agent are further selectively controlled within the ranges described above, such that the linear conductive agent can be enabled to construct a more abundant long-range conductive network structure in the positive electrode active substance layer, thereby further enhancing the synergistic conductive effect of the linear conductive agent and the particulate conductive agent, and further improving the conductivity of the positive electrode active substance layer.

In the embodiments, in addition to including components such as the positive electrode active material, the binder, and the conductive agent, the positive electrode active substance layer in the positive electrode of the embodiments described above may further include other additives. In the embodiments, the additives may include, but are not limited to, functional components such as a sodium supplement additive.

In some embodiments, a content on a single surface of the current collector, that is, a coating weight (CW), of the positive electrode active substance layer in the embodiments described above is 260-350 mg/1540.25 mm$^2$, optionally 280-320 mg/1540.25 mm$^2$. In an exemplary embodiment, the content may be a typical but non-limiting content such as 260 mg/1540.25 mm$^2$, 270 mg/1540.25 mm$^2$, 280 mg/1540.25 mm$^2$, 290 mg/1540.25 mm$^2$, 300 mg/1540.25 mm$^2$, 310 mg/1540.25 mm$^2$, 320 mg/1540.25 mm$^2$, 330 mg/1540.25 mm$^2$, 340 mg/1540.25 mm$^2$, and 350 mg/1540.25 mm$^2$, or in a range between any two of the content values. The coating weight refers to the weight of the positive electrode active substance layer per unit area. The coating weight within the range can effectively enable the DCR of the battery cell during the charging and discharging processes to be relatively stable and improve the energy density of the battery cell.

In some embodiments, a compacted density of the positive electrode active substance layer in the embodiments described above, that is, a compacted density of the positive electrode plate, may be 2.6-3.4 g/cm$^3$, optionally 2.8-3.2 g/cm$^3$. In an exemplary embodiment, the compacted density may be a typical but non-limiting compacted density such as 2.6 g/cm$^3$, 2.7 g/cm$^3$, 2.8 g/cm$^3$, 2.9 g/cm$^3$, 3.0 g/cm$^3$, 3.1 g/cm$^3$, 3.2 g/cm$^3$, 3.3 g/cm$^3$, and 3.4 g/cm$^3$, or in a range between any two of the compacted density values. The compacted density refers to the weight of the positive electrode active substance layer per unit volume. The compacted density within the range can effectively improve the stability of the contact interface between the positive electrode and the electrolytic solution, improve the relative stability of the DCR of the battery cell during the charging and discharging processes, and improve the energy density of the battery cell.

In some embodiments, a porosity of the positive electrode active substance layer in the embodiments described above may be 40-70%, optionally 50-65%. In an exemplary embodiment, the porosity may be a typical but non-limiting porosity such as 40%, 43%, 45%, 48%, 50%, 53%, 55%, 58%, 60%, 63%, 65%, and 70%, or in a range between any two of the porosity values. The porosity refers to the percentage of a total volume of pores included in a unit volume of the positive electrode active substance layer to the unit volume of the positive electrode active substance layer. The porosity within the range can enable the positive electrode active substance layer to have the compacted density described above, further improve the wettability of the electrolytic solution of the positive electrode and improve the stability of the contact interface with the electrolytic solution, improve the relative stability of the DCR of the battery cell during the charging and discharging processes, and improve the energy density of the battery cell. The porosity of the positive electrode active substance layer (electrode plate) in the embodiments described above may be measured according to the following method.

Measurement is performed by means of a gas displacement method, with specific reference to GB/T 24586-2009. Specific steps of a method for measuring the porosity of an electrode plate are as follows: dipping the positive electrodes in the battery cells in Examples B1 to B17 and Comparative Examples B1 to B2 separately into ethyl methyl carbonate (EMC) for cleaning; then performing testing by using the method specified in GB/T 24586-2009; and accurately measuring, by means of the gas displacement method in combination with Archimedes' principle and Boyle's law, the true volume of the measured material, which is the true volume of the sample, thereby obtaining the porosity of the sample under measurement. The percentage of a pore volume in a single electrode plate to a total volume of the electrode plate is the porosity of the electrode plate, and a calculation formula is: porosity = $(V-V0)/V \times 100\%$, where V0 represents the true volume, and V represents the apparent volume.

In some embodiments, the positive electrode in the embodiments described above is an electrode plate, and a film resistance of the positive electrode active substance layer in the embodiments described above may be 0.5-5 mΩ, optionally 0.5-3 mΩ. In an exemplary embodiment, the film resistance may be a typical but non-limiting value such as 0.5 mΩ, 1 mΩ, 1.5 mΩ, 2 mΩ, 2.5 mΩ, 3 mΩ, 3.5 mΩ, 4 mΩ, 4.5 mΩ, and 5 mΩ, or in a range between any two of the film resistance values. The electrode plate has the sheet-like morphology described above, and therefore, the electrode plate has two opposite surfaces. The film resistance refers to the resistance value between one surface and the other opposite surface of the positive electrode having the sheet-like morphology. The film resistance within the range can effectively improve the performance of the battery, including efficiency, service life, and the like. The film resistance of the electrode

plate may be measured according to the following method.

Measurement is performed with reference to the method of GB/T 30835-2014 or T/CASAS 019-2021; for verification regulations of a tester, measurement is performed with reference to the method of JJG 508-2004. Specifically, a four-probe method is used for measurement: dipping the positive electrodes in the battery cells in Examples B1 to B17 and Comparative Examples B1 to B2 separately into ethyl methyl carbonate (EMC) for cleaning; performing testing by using the method specified in GB/T 30835-2014 or T/CASAS 019-2021; fixing four copper blocks, measuring 1.5 cm long * 1 cm wide * 2 mm thick, on a line at equal intervals, where the spacing between the two middle copper blocks is denoted by L (1-2 cm), and the substrate for fixing the copper blocks is an insulating material; pressing, during testing, lower end surfaces of the four copper blocks onto the measured electrode plate, with a direct current I being connected to the copper blocks at two ends; measuring the voltage V at the two middle copper blocks; reading I and V values three times; and taking the average values of I and V, where V/I is the resistance of the electrode plate at the test position.

In some embodiments, the positive electrode in the embodiments described above is an electrode plate, and a ratio of a thickness from one surface to the other opposite surface of the electrode plate to a thickness of the current collector is (7-15):1, optionally (8-14):1. In an exemplary embodiment, the ratio may be a typical but non-limiting ratio such as 7:1, 8:1, 9:1, 10:1, 11:1, 12:1, 13:1, 14:1, and 15:1, or in a range between any two of the ratio values. The thickness refers to the vertical distance from one surface to the other opposite surface of a layer structure. As shown in FIG. 1, when the positive electrode active substance layer is disposed on one surface of the current collector, the thickness from one surface to the other opposite surface of the electrode plate refers to the sum of the thickness of the one positive electrode active substance layer and the thickness of the current collector. As shown in FIG. 2, when both surfaces of the current collector have the positive electrode active substance layers, the thickness from one surface to the other opposite surface of the electrode plate refers to the total sum of the thicknesses of the two positive electrode active substance layers and the thickness of the current collector.

In the embodiments, the thickness of the positive electrode active substance layer on the electrode plate may be controlled to 85-221 μm, and further to 117-182 μm. In an exemplary embodiment, the thickness may be a typical but non-limiting thickness such as 85 μm, 90 μm, 100 μm, 110 μm, 117 μm, 120 μm, 130 μm, 140 μm, 150 μm, 160 μm, 170 μm, 180 μm, 182 μm, 190 μm, 200 μm, 210 μm, 220 μm, and 221 μm, or in a range between any two of the thickness values. In the embodiments, the thickness of the current collector may be, but is not limited to, 13-15 μm.

Controlling the total thickness of the electrode plate and the thickness of the current collector within the ratio range or the specific thickness ranges described above can effectively improve the structure of the positive electrode active substance layer included in the electrode plate, for example, regulating the performances, such as the pore structure, the film resistance, and the capacity, of the positive electrode active substance layer, thereby further improving the wettability of the electrolytic solution of the positive electrode and improving the stability of the contact interface with the electrolytic solution, improving the relative stability of the DCR of the battery cell during the charging and discharging processes, and improving the electrochemical performance, such as the energy density and the cycle performance, of the battery cell.

**Preparation Method for Positive Electrode:**

The embodiments of the present application further provide a preparation method for the positive electrode of the embodiments described above. In some embodiments, the preparation method for the positive electrode of the embodiments described above includes the following steps.

In S20, a mixing treatment is performed on components including a positive electrode active material, a binder, and a conductive agent in proportion in a solvent to prepare a positive electrode slurry.

In S30, a film-forming treatment is performed on the positive electrode slurry on a current collector to form a positive electrode active substance layer, thereby obtaining the positive electrode.

Step S20:

The positive electrode active material in step S20 includes the positive electrode material composition of the embodiments of the present application described above.

The mixing treatment may be performed on the components, such as the positive electrode active material, the binder, and the conductive agent in step S20, according to the content ratio of the corresponding components included in the positive electrode active substance layer of the positive electrode described above. The solvent may be selected from an organic solvent or water suitable for preparing the positive electrode slurry.

The mixing treatment in step S20 may be performed according to a conventional preparation method for an electrode slurry, for example, including but not limited to a stirring treatment, until the components are uniformly dispersed to form a stable positive electrode slurry. Certainly, properties such as the viscosity of the positive electrode slurry should meet the requirements of a film-forming process, so as to form a positive electrode active substance layer that meets the

quality requirements on the current collector.

Step S30:

Based on the positive electrode slurry components prepared in step S20, the positive electrode active substance layer prepared in step S30 is the positive electrode active substance layer included in the positive electrode of the embodiments of the present application described above.

The film-forming treatment performed on the positive electrode slurry on the current collector in step S30 may be performed according to a conventional method for a positive electrode active substance layer. As in the embodiments, the electrode slurry may first be formed into a wet film on the current collector; then a drying treatment is performed to evaporate the solvent, thereby drying the wet film; and then a rolling treatment is performed on the dried film layer to form the positive electrode active substance layer, thereby obtaining the positive electrode.

Certainly, the positive electrode active substance layer may also be prepared by a method improved from a conventional preparation method for a positive electrode active substance layer, or the positive electrode active substance layer may be prepared by adopting a new method. Any method of preparing the positive electrode active substance layer on the current collector using the electrode slurry from step S20 falls within the scope disclosed in the specification of the embodiments of the present application.

In addition, conditions for the film-forming treatment in S30 are controlled and adjusted; for example, conditions for forming a wet film on the current collector using the positive electrode slurry prepared in step S20, conditions for the rolling treatment, and the like are controlled and adjusted, such that the relevant performance of the formed positive electrode active substance layer can be controlled and adjusted. For example, the content of the positive electrode active substance layer on a single surface of the current collector is controlled and adjusted to the above-mentioned range of 250-330 mg/1540.25 $mm^2$, the compacted density is controlled and adjusted to the above-mentioned range of 2.6-3.2 $g/cm^3$, the porosity is controlled and adjusted to the above-mentioned range of 35-65%, and the film resistance of the electrode plate is controlled and adjusted to the above-mentioned range of 0.5-5 mΩ.

**Battery**

In a fourth aspect, the embodiments of the present application further provide a sodium battery.

In the embodiments, the sodium battery of the embodiments of the present application may include any one of a sodium battery cell, a battery module, and a battery pack.

Sodium Battery Cell:

The sodium battery cell, also referred to as a sodium cell, includes a battery outer package and an electrode assembly enclosed within the battery outer package. The number of electrode assemblies included in the battery cell may be one or more, and the number of electrode assemblies may be adjusted according to actual needs.

The outer package of the sodium battery cell may be a hard shell, such as a hard plastic shell, an aluminum shell, or a steel shell; or the outer package may be a soft pack, such as a pouch-type soft pack. The soft pack may be made of plastic, such as polypropylene, polybutylene terephthalate, and polybutylene succinate. The shape of the outer package may be cylindrical, prismatic, or any other shape. The shape of the outer package defines the shape of the sodium battery cell; therefore, the shape of the sodium battery cell may also be cylindrical, prismatic, or any other shape corresponding to the shape of the outer package. In an exemplary embodiment, the sodium battery cell may be the battery cell 20 having a prismatic structure as shown in FIG. 3.

In some embodiments, as shown in FIG. 4, the outer package of the battery cell 20 may include a shell body 21 and a cover plate 23. The shell body 21 may include a bottom plate and side plates connected to the bottom plate. The bottom plate and the side plates define, in an enclosing manner, an accommodating cavity. The shell body 21 is provided with an opening communicating with the accommodating cavity, and the cover plate 23 is configured to cover the opening to seal the accommodating cavity. One or more electrode assemblies 22 are enclosed within the accommodating cavity.

In the embodiments, the sodium battery cell may be a sodium battery cell including an electrolytic solution, or the sodium battery cell may be a sodium battery cell including a solid-state electrolyte.

When the sodium battery cell is a sodium battery cell including an electrolytic solution, the electrode assembly included in the sodium battery cell usually includes a positive electrode, a negative electrode, and a separator. The positive electrode and the negative electrode are alternately stacked, and the separator is stacked between the positive electrode and the negative electrode to play an isolating role, separating the positive electrode and the negative electrode. The positive electrode, the separator layer, and the negative electrode may form an electrode assembly having a stacked structure by a stacking process, or the positive electrode, the separator layer, and the negative electrode may form an electrode assembly having a wound core structure by a winding process. The electrode assembly including the separator

is placed in the outer package, an electrolytic solution is injected to wet the electrode assembly, and the sodium battery cell is obtained after packaging.

When the sodium battery cell is a sodium battery cell including a solid-state electrolyte, the electrode assembly included in the sodium battery cell usually includes a positive electrode, a negative electrode, and a solid-state electrolyte. The positive electrode and the negative electrode are alternately stacked, and the solid-state electrolyte is stacked between the positive electrode and the negative electrode to play an isolating role, separating the positive electrode and the negative electrode. The electrode assembly including the solid-state electrolyte is placed in the outer package, and the sodium battery cell is obtained after packaging.

In each of the above sodium battery cells, the positive electrode included in the electrode assembly is the positive electrode of the embodiments of the present application described above; that is, the positive electrode active substance layer of the positive electrode includes the positive electrode material composition of the embodiments of the present application described above. In this way, the contact interface between the electrode assembly included in the sodium battery cell of the embodiments of the present application and the electrolytic solution is stable, the DCR during the charging and discharging processes is relatively stable, and the DCR growth rate of the battery cell during the charging and discharging processes is small. On this basis, the battery cell also exhibits electrochemical performance such as high energy density and good cycle performance.

In each of the above sodium battery cells, the negative electrode included in the electrode assembly includes a negative electrode current collector, and optionally further includes a negative electrode active substance layer disposed on a surface of the negative electrode current collector; the negative electrode active substance layer includes a negative electrode active material. In the embodiments, the negative electrode current collector may include, but is not limited to, a metal or a composite current collector. For example, as a metal, sodium, a sodium alloy, copper, a copper alloy, nickel, a nickel alloy, titanium, a titanium alloy, silver, a silver alloy, or the like may be used. In the case where sodium or a sodium alloy is used as the negative electrode current collector, because the sodium or the sodium alloy per se can also serve as the negative electrode active material, the negative electrode plate may not include the negative electrode active substance layer, and the sodium or the sodium alloy acts as both the current collector and the negative electrode active material.

The composite current collector may include a composite material of a polymer material and a metal; the polymer material may include, but is not limited to, polypropylene (PP), polyethylene terephthalate (PET), polybutylene terephthalate (PBT), polystyrene (PS), and polyethylene (PE), and the metal may include, but is not limited to, sodium, copper, a copper alloy, nickel, a nickel alloy, titanium, a titanium alloy, silver, or a silver alloy. The composite current collector may be obtained by blending the polymer material and the metal with each other, or the metal may be coated on at least one side of the polymer material by means of electroplating, coating, or other methods.

When the negative electrode includes the negative electrode active substance layer, the negative electrode active material in the negative electrode active substance layer may include, but is not limited to, a mixed or composite material formed by any one or more of a carbon-based material, an alloy material, a titanium-based material, and sodium metal. The carbon-based material includes, but is not limited to, one or more of graphite, soft carbon, hard carbon, carbon microspheres, and carbon fiber; the alloy material includes, but is not limited to, one or more of a sodium-tin alloy, a sodium-germanium alloy, and a sodium-antimony alloy; and the titanium-based material includes, but is not limited to, one or more of titanium dioxide, a titanate, and a titanium phosphate.

A mass content of the negative electrode active material in the negative electrode active substance layer may be 85-98%, optionally 95-98%. In an exemplary embodiment, the mass content may be a typical but non-limiting content such as 85%, 90%, 91%, 92%, 93%, 94%, 95%, 96%, 97%, and 98%, or in a range between any two of the content values.

The negative electrode active substance layer may further include at least one of a conductive agent and a binder. The conductive agent is used to collect current between the negative electrode active materials and between the active material and the current collector, thereby improving the electronic conductivity. Additionally, the conductive agent can also promote the wetting of the negative electrode plate by the electrolytic solution. The binder can improve the bonding strength between substances in the negative electrode active substance layer, and between the active layer and the current collector.

In the embodiments, a mass content of the conductive agent in the negative electrode active substance layer may be 0.5-10%. In an exemplary embodiment, the mass content may be a typical but non-limiting content such as 0.5%, 1%, 2%, 3%, 4%, 5%, 6%, 7%, 8%, 9%, and 10%, or in a range between any two of the content values; the mass content may also be set to other contents as needed. In an exemplary embodiment, the conductive agent includes one or more of acetylene black (SP), a carbon nanotube, conductive carbon black (super-P), Ketjen black, carbon fiber, and graphene.

In the embodiments, a mass content of the binder in the negative electrode active substance layer may be 0.5-10%. In an exemplary embodiment, the mass content may be a typical but non-limiting content such as 0.5%, 1%, 2%, 3%, 4%, 5%, 6%, 7%, 8%, 9%, and 10%, or in a range between any two of the content values; the mass content may also be set to other contents as needed. In an exemplary embodiment, the binder includes, but is not limited to, one or more of polyvinylidene fluoride, polyvinylidene fluoride-hexafluoropropylene copolymer, polyethylene oxide, polyimide, polyte-

trafluoroethylene, polybutyl acrylate, polyacrylonitrile, carboxymethylcellulose, carboxymethylcellulose salts, polyacrylic acid, polyacrylate, polyvinyl alcohol, sodium alginate, cyclodextrin, styrene-butadiene rubber, vinyl acetate resins, acrylic resins, and chlorinated rubber.

In the embodiments, the negative electrode active substance layer optionally further includes a thickener, which may be, but is not limited to, carboxymethylcellulose (CMC). A mass content of the thickener in the negative electrode active layer may be set to 0.5-5%. In an exemplary embodiment, the mass content may be a typical but non-limiting content such as 0.5%, 1%, 1.5%, 2%, 2.5%, 3%, 3.5%, 4%, 4.5%, and 5%, or in a range between any two of the content values.

In the embodiments, when each of the above sodium battery cells includes a separator, the separator is disposed between the positive electrode and the negative electrode to separate the positive electrode and the negative electrode, as described above. The separator can block electrons in the battery from passing freely to prevent a contact short-circuit between the electrodes, but allows sodium ions in the electrolyte to pass freely between the positive electrode and the negative electrode. The separator may be any known porous-structure separator having electrochemical stability and mechanical stability. In an exemplary embodiment, the separator includes a single-layer or multi-layer film of at least one of glass fiber, non-woven fabric, polyethylene (PE), polypropylene (PP), polyvinylidene fluoride (PVDF), and the like.

In the embodiments, when each of the above sodium battery cells includes a solid-state electrolyte, the solid-state electrolyte is disposed between the positive electrode and the negative electrode to separate the positive electrode and the negative electrode, as described above. The solid-state electrolyte may include at least one of a polymer solid electrolyte, an oxide electrolyte, a sulfide electrolyte, a borohydride electrolyte, a composite solid-state electrolyte, and the like.

According to measurement, in the embodiments, after the sodium battery cell of the embodiments of the present application undergoes 1000 charging and discharging cycles, the DCR growth rate of the battery cell is lower than 180%. Therefore, the sodium battery cell including the positive electrode material composition of the embodiments of the present application described above exhibits a stable DCR during the charging and discharging processes, and the DCR growth rate is small. The method for measuring the DCR of the sodium battery cell is performed according to a method in the embodiments below.

According to further measurement, as in the embodiments, an operating voltage of the sodium battery cell of the embodiments of the present application is 1.5-4.0 V; that is, the sodium battery cell of the embodiments of the present application may be discharged at 1.5-4.0 V. In the embodiments, the energy density of the sodium battery cell of the embodiments of the present application at 1.5-4.0 V may reach 120-130 Wh/K. Therefore, the sodium battery cell of the embodiments of the present application further exhibits high energy density.

Methods for measuring the performance, such as the DCR and the energy density, of the sodium battery cell are performed according to the methods in the embodiments below.

Battery Module:

When the sodium battery of the embodiments of the present application is a battery module, the battery module is assembled from the above sodium battery cells; that is, the battery module may include a plurality of the above sodium battery cells, and the specific number of sodium battery cells may be adjusted according to the application and the capacity of the battery module.

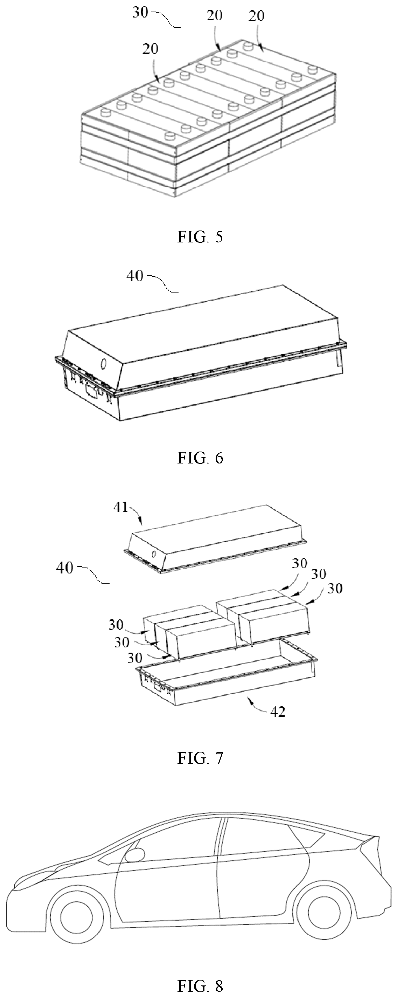

In some embodiments, FIG. 5 is a schematic diagram of a battery module 30 as one example. As shown in FIG. 5, in the battery module 30, a plurality of sodium battery cells 20 may be sequentially arranged in a length direction of the battery module 30. Certainly, the arrangement may also be in any other manner. Further, the plurality of battery cells 20 may be fixed by fasteners.

Optionally, the battery module 30 may further include a shell having an accommodating space in which the plurality of sodium battery cells 20 are accommodated.

Battery Pack:

When the sodium battery of the embodiments of the present application is a battery pack, the battery pack is assembled from the above sodium battery cells; that is, the battery pack may include a plurality of sodium battery cells, and the plurality of the sodium battery cells are assembled into the above battery module. The specific number of battery cells or battery modules included in the battery pack may be adjusted according to the application and the capacity of the battery pack.

In some embodiments, FIGs. 6 and 7 are schematic diagrams of a battery pack 40 as one example. The battery pack 40 may include a battery case and a plurality of battery modules 30 disposed in the battery case. The battery case includes an upper case body 41 and a lower case body 42. The upper case body 41 is configured to cover the lower case body 42 to form a closed space for accommodating the battery modules 30. The plurality of battery modules 30 may be arranged in any manner in the battery case.

## Electric Device

In a fifth aspect, the embodiments of the present application further provide an electric device. The electric device of the embodiments of the present application includes a power supply unit or an energy storage unit, and certainly, may further include other auxiliary components or necessary components. The power supply unit or the energy storage unit includes the sodium battery of the embodiments of the present application described above. For example, the sodium battery may be the sodium battery cell, the battery module, or the battery pack. Because the electric device of the embodiments of the present application includes the sodium battery of the embodiments of the present application described above, the power supply unit or the energy storage unit of the electric device of the embodiments of the present application exhibits good cycle performance, high energy density, and a long service life, and the electric device of the embodiments of the present application features a long standby time or endurance time.

In the embodiments, the electric device may include, but is not limited to, a mobile phone, a tablet, a laptop computer, an electric toy, an electric tool, an electric bicycle, an electric vehicle, a ship, and a spacecraft. The electric toy may include stationary or mobile electric toys, such as game consoles, electric car toys, electric ship toys, or electric airplane toys. The spacecraft may include airplanes, rockets, space shuttles, spaceships, and the like. As for the electric device, the battery cell, the battery module, or the battery pack may be selected according to the usage requirements of the electric device.

FIG. 8 is a schematic diagram of an electric device as one example. The electric device is a pure electric vehicle, a hybrid electric vehicle, a plug-in hybrid electric vehicle, or the like. To meet the requirements of the electric device for high power and high energy density, a battery pack or a battery module may be used.

In the embodiments, when the electric device includes an energy storage unit, the electric device may be an energy storage device. The energy storage device includes the energy storage unit, and certainly, may further include other auxiliary components or necessary components. The energy storage unit includes the battery of the embodiments of the present application described above. The energy storage unit may include one or more batteries. When there are a plurality of batteries, the plurality of batteries may form a battery module or a battery pack. Because the energy storage device of the embodiments of the present application includes the battery of the embodiments of the present application described above, the energy storage device exhibits high energy density, good cycle performance, and a long service life, and further has high energy density.

## Examples

Hereinafter, examples of the present application are described. The examples described below are illustrative and merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

1. Examples of Positive Electrode Material Composition and Preparation Method Therefor

### Example A1

This example provides a positive electrode material composition and a preparation method therefor. The positive electrode material composition includes two nickel-iron-manganese-based sodium-ion battery positive electrode active materials, and the two nickel-iron-manganese-based sodium-ion battery positive electrode active materials are physically mixed according to the ratio in Table 1 below to form a mixture.

The preparation method for the positive electrode material composition included the following steps.

In S1, NiO, ZnO, $Mn_2O_3$, $Fe_2O_3$, and CaO were subjected to a ball milling treatment at a rotational speed of 800 rpm for 5 hours according to a molar ratio of metal elements included in $Na_{0.88}Ni_{0.21}Fe_{0.30}Mn_{0.38}Zn_{0.08}Ca_{0.03}O_2$ represented by Chemical Formula I, and then sodium carbonate was proportionally added to perform a mixing treatment to obtain a precursor of Chemical Formula I; NiO, ZnO, $Mn_2O_3$, $Fe_2O_3$, CuO, and $Al_2O_3$ were subjected to a ball milling treatment at a rotational speed of 800 rpm for 5 hours according to a molar ratio of metal elements included in $Na_{0.91}Ni_{0.26}Fe_{0.24}Mn_{0.41}Cu_{0.08}Al_{0.01}O_2$ represented by Chemical Formula II, and then sodium carbonate was proportionally added to perform a mixing treatment to obtain a precursor of Chemical Formula II.

In S2, the precursors of Chemical Formula I and Chemical Formula II were separately subjected to a sintering treatment in a muffle furnace and crushed to obtain nickel-iron-manganese-based sodium-ion battery positive electrode active materials represented by Chemical Formula I and Chemical Formula II, respectively; then, dry mixing was performed according to a molar ratio of Formula II to Formula I of 0.5:1 to form a mixture, where the sintering treatment was performed under the following conditions: a temperature of 800 °C, a duration of 8 hours, a heating rate of 10 °C/min,

and an oxygen atmosphere.

### Examples A2 to A7

Examples A2 to A7 each provide a positive electrode material composition and a preparation method therefor. Compared with Example A1, the positive electrode material composition differs in that a physical mixing ratio of the two nickel-iron-manganese-based sodium-ion battery positive electrode active materials is different, and other aspects are the same as the positive electrode material composition in Example A1. A molar ratio of Formula II to Formula I in Example A2 is 0.6:1, a molar ratio of Formula II to Formula I in Example A3 is 1.5:1, a molar ratio of Formula II to Formula I in Example A4 is 3:1, a molar ratio of Formula II to Formula I in Example A5 is 4:1, a molar ratio of Formula II to Formula I in Example A6 is 5:1, and a molar ratio of Formula II to Formula I in Example A7 is 6:1.
The methods for preparing the positive electrode material composition in Examples A2 to A7 are performed with reference to the preparation method for the positive electrode material composition in Example A1.

### Example A8

This example provides a positive electrode material composition and a preparation method therefor. The positive electrode material composition includes two nickel-iron-manganese-based sodium-ion battery positive electrode active materials, and the two nickel-iron-manganese-based sodium-ion battery positive electrode active materials are physically mixed according to the ratio in Table 1 below to form a mixture.
The preparation method for the positive electrode material composition included the following steps.
In S1, NiO, ZnO, $Mn_2O_3$, $Fe_2O_3$, and CaO were subjected to a ball milling treatment at a rotational speed of 800 rpm for 5 hours according to a molar ratio of metal elements included in $Na_{0.88}Ni_{0.21}Fe_{0.25}Mn_{0.38}Zn_{0.13}Ca_{0.03}O_2$ represented by Chemical Formula I, and then sodium carbonate was proportionally added to perform a mixing treatment to obtain a precursor of Chemical Formula I; NiO, ZnO, $Mn_2O_3$, $Fe_2O_3$, CuO, and $Al_2O_3$ were subjected to a ball milling treatment at a rotational speed of 800 rpm for 5 hours according to a molar ratio of metal elements included in $Na_{0.91}Ni_{0.26}Fe_{0.24}Mn_{0.35}Cu_{0.14}Al_{0.01}O_2$ represented by Chemical Formula II, and then sodium carbonate was proportionally added to perform a mixing treatment to obtain a precursor of Chemical Formula II.
In S2, the precursors of Chemical Formula I and Chemical Formula II were separately subjected to a sintering treatment in a muffle furnace and crushed to obtain nickel-iron-manganese-based sodium-ion battery positive electrode active materials represented by Chemical Formula I and Chemical Formula II, respectively; then, dry mixing was performed according to a molar ratio of Formula II to Formula I of 6.3:1 to form a mixture, where the sintering treatment was performed under the following conditions: a temperature of 800 °C, a duration of 8 hours, a heating rate of 10 °C/min, and an oxygen atmosphere.

### Example A9

This example provides a positive electrode material composition and a preparation method therefor. The positive electrode material composition includes two nickel-iron-manganese-based sodium-ion battery positive electrode active materials, and the two nickel-iron-manganese-based sodium-ion battery positive electrode active materials are physically mixed according to the ratio in Table 1 below to form a mixture.
The preparation method for the positive electrode material composition included the following steps.
In S1, NiO, ZnO, $Mn_2O_3$, $Fe_2O_3$, and CaO were subjected to a ball milling treatment at a rotational speed of 800 rpm for 5 hours according to a molar ratio of metal elements included in $Na_{0.88}Ni_{0.15}Fe_{0.30}Mn_{0.38}Zn_{0.14}Ca_{0.03}O_2$ represented by Chemical Formula I, and then sodium carbonate was proportionally added to perform a mixing treatment to obtain a precursor of Chemical Formula I; NiO, ZnO, $Mn_2O_3$, $Fe_2O_3$, CuO, and $Al_2O_3$ were subjected to a ball milling treatment at a rotational speed of 800 rpm for 5 hours according to a molar ratio of metal elements included in $Na_{0.91}Ni_{0.26}Fe_{0.24}Mn_{0.46}Cu_{0.04}Al_{0.01}O_2$ represented by Chemical Formula II, and then sodium carbonate was proportionally added to perform a mixing treatment to obtain a precursor of Chemical Formula II.
In S2, the precursors of Chemical Formula I and Chemical Formula II were separately subjected to a sintering treatment in a muffle furnace and crushed to obtain nickel-iron-manganese-based sodium-ion battery positive electrode active materials represented by Chemical Formula I and Chemical Formula II, respectively; then, dry mixing was performed according to a molar ratio of Formula II to Formula I of 0.5:1 to form a mixture, where the sintering treatment was performed under the following conditions: a temperature of 800 °C, a duration of 8 hours, a heating rate of 10 °C/min, and an oxygen atmosphere.

**Example A10**

This example provides a positive electrode material composition and a preparation method therefor. The positive electrode material composition includes two nickel-iron-manganese-based sodium-ion battery positive electrode active materials, and the two nickel-iron-manganese-based sodium-ion battery positive electrode active materials are physically mixed according to the ratio in Table 1 below to form a mixture.

The preparation method for the positive electrode material composition included the following steps.

In S1, NiO, $TiO_2$, $Mn_2O_3$, $Fe_2O_3$, and $Ir_2O_3$ were subjected to a ball milling treatment at a rotational speed of 800 rpm for 5 hours according to a molar ratio of metal elements included in $Na_{0.88}Ni_{0.21}Fe_{0.30}Mn_{0.38}Ti_{0.08}Zr_{0.03}O_2$ represented by Chemical Formula I, and then sodium carbonate was proportionally added to perform a mixing treatment to obtain a precursor of Chemical Formula I; NiO, ZnO, $Mn_2O_3$, $Fe_2O_3$, CuO, and $Al_2O_3$ were subjected to a ball milling treatment at a rotational speed of 800 rpm for 5 hours according to a molar ratio of metal elements included in $Na_{0.91}Ni_{0.26}Fe_{0.24}Mn_{0.41}Cu_{0.08}Al_{0.01}O_2$ represented by Chemical Formula II, and then sodium carbonate was proportionally added to perform a mixing treatment to obtain a precursor of Chemical Formula II.

In S2, the precursors of Chemical Formula I and Chemical Formula II were separately subjected to a sintering treatment in a muffle furnace and crushed to obtain nickel-iron-manganese-based sodium-ion battery positive electrode active materials represented by Chemical Formula I and Chemical Formula II, respectively; then, dry mixing was performed according to a molar ratio of Formula II to Formula I of 3:1 to form a mixture, where the sintering treatment was performed under the following conditions: a temperature of 800 °C, a duration of 8 hours, a heating rate of 10 °C/min, and an oxygen atmosphere.

**Example A11**

This example provides a positive electrode material composition and a preparation method therefor. The positive electrode material composition includes two nickel-iron-manganese-based sodium-ion battery positive electrode active materials, and the two nickel-iron-manganese-based sodium-ion battery positive electrode active materials are physically mixed according to the ratio in Table 1 below to form a mixture.

The preparation method for the positive electrode material composition included the following steps.

In S1, NiO, $TiO_2$, $Mn_2O_3$, $Fe_2O_3$, and $SnO_2$ were subjected to a ball milling treatment at a rotational speed of 800 rpm for 5 hours according to a molar ratio of metal elements included in $Na_{0.88}Ni_{0.21}Fe_{0.30}Mn_{0.38}Mg_{0.08}Sn_{0.03}O_2$ represented by Chemical Formula I, and then sodium carbonate was proportionally added to perform a mixing treatment to obtain a precursor of Chemical Formula I; NiO, ZnO, $Mn_2O_3$, $Fe_2O_3$, CuO, and $Al_2O_3$ were subjected to a ball milling treatment at a rotational speed of 800 rpm for 5 hours according to a molar ratio of metal elements included in $Na_{0.91}Ni_{0.26}Fe_{0.24}Mn_{0.41}Cu_{0.08}Al_{0.01}O_2$ represented by Chemical Formula II, and then sodium carbonate was proportionally added to perform a mixing treatment to obtain a precursor of Chemical Formula II.

In S2, the precursors of Chemical Formula I and Chemical Formula II were separately subjected to a sintering treatment in a muffle furnace and crushed to obtain nickel-iron-manganese-based sodium-ion battery positive electrode active materials represented by Chemical Formula I and Chemical Formula II, respectively; then, dry mixing was performed according to a molar ratio of Formula II to Formula I of 3:1 to form a mixture, where the sintering treatment was performed under the following conditions: a temperature of 800 °C, a duration of 8 hours, a heating rate of 10 °C/min, and an oxygen atmosphere.

**Comparative Example A1**

This comparative example provides a positive electrode material composition and a preparation method therefor. The positive electrode material composition includes two nickel-iron-manganese-based sodium-ion battery positive electrode active materials, and the two nickel-iron-manganese-based sodium-ion battery positive electrode active materials are physically mixed according to the ratio in Table 1 below to form a mixture.

The preparation method for the positive electrode material composition included the following steps.

In S1, NiO, ZnO, $Mn_2O_3$, $Fe_2O_3$, and CaO were subjected to a ball milling treatment at a rotational speed of 800 rpm for 5 hours according to a molar ratio of metal elements included in $Na_{0.88}Ni_{0.15}Fe_{0.30}Mn_{0.38}Zn_{0.14}Ca_{0.03}O_2$ represented by Chemical Formula I, and then sodium carbonate was proportionally added to perform a mixing treatment to obtain a precursor of Chemical Formula I; NiO, ZnO, $Mn_2O_3$, $Fe_2O_3$, CuO, and $Al_2O_3$ were subjected to a ball milling treatment at a rotational speed of 800 rpm for 5 hours according to a molar ratio of metal elements included in $Na_{0.91}Ni_{0.26}Fe_{0.24}Mn_{0.37}Cu_{0.12}Al_{0.01}O_2$ represented by Chemical Formula II, and then sodium carbonate was proportionally added to perform a mixing treatment to obtain a precursor of Chemical Formula II.

In S2, the precursors of Chemical Formula I and Chemical Formula II were separately subjected to a sintering treatment in a muffle furnace and crushed to obtain nickel-iron-manganese-based sodium-ion battery positive electrode

active materials represented by Chemical Formula I and Chemical Formula II, respectively; then, dry mixing was performed according to a molar ratio of Formula II to Formula I of 1:10 to form a mixture, where the sintering treatment was performed under the following conditions: a temperature of 800 °C, a duration of 8 hours, a heating rate of 10 °C/min, and an oxygen atmosphere.

2. Examples of Positive Electrode and Sodium-Ion Battery Cell

**Examples B1 to B11**

Examples B1 to B11 each provide a sodium-ion battery cell. Each sodium-ion battery cell includes an electrode assembly formed by a positive electrode plate, a separator, and a negative electrode plate, and further includes an electrolytic solution.

The sodium-ion battery cells in Examples B1 to B11 were assembled as follows.

Positive electrode plate: a sodium-ion positive electrode active material, conductive agent carbon nanotubes, conductive agent carbon black, and binder polyvinylidene fluoride (PVDF) were thoroughly stirred and mixed in an appropriate amount of solvent NMP at a weight ratio of 95:0.5:2:2.5 to form a uniform positive electrode slurry; the positive electrode slurry was uniformly coated on a surface of a 13 μm positive electrode current collector aluminum foil, and after drying and cold pressing, the positive electrode plates in Examples B1 to B10 were obtained, where the sodium-ion positive electrode active materials were respectively the positive electrode material compositions in Examples A1 to A10; the positive electrode plate in Example B11 used the positive electrode material composition in Example A11 as the positive electrode material, and the carbon nanotubes in the positive electrode plate was replaced with carbon fiber, and the content of the carbon fiber was controlled to be 0.8%. As shown in Table 2, the total content of the conductive agent in the positive electrode plate in Example B1 is the same as the total content of the conductive agent in the positive electrode plate of Example B1.

Negative electrode plate: Hard carbon, a conductive agent SP, and a CMC binder were added to deionized water at a weight ratio of 8:1:1 and thoroughly stirred and mixed to form a uniform negative electrode slurry; the negative electrode slurry was uniformly coated on a surface of a 6 μm copper foil, and after drying and cold pressing, the negative electrode plate was obtained.

Electrolytic solution: In an environment with a water content of less than 10 ppm, nonaqueous organic solvents ethylene carbonate (EC) and diethyl carbonate (DMC) were mixed at a volume ratio of 1:1 to obtain an electrolytic solution solvent, and then sodium hexafluorophosphate and the mixed solvent were mixed to prepare the electrolytic solution with a sodium salt concentration of 1 mol/L.

Separator: A porous polyethylene (PE) film was adopted as the separator.

Battery assembly: The positive electrode plate, the separator, and the negative electrode plate were stacked in sequence, such that the separator was located between the positive electrode plate and the negative electrode plate to play an isolating role, and the electrode assembly was obtained by a stacking process. Each electrode assembly was separately placed in an outer package, injected with the electrolytic solution after drying, and subjected to processes such as vacuum packaging, standing, formation, and shaping, to obtain the sodium-ion battery cells in Examples B1 to B11. The sodium-ion positive electrode active material in Example B1 is the positive electrode material composition in Example A1, the sodium-ion positive electrode active material in Example B2 is the positive electrode material composition in Example A2, and so on; the sodium-ion positive electrode active material in Example B11 is the positive electrode material composition in Example A11.

**Comparative Example B1**

This comparative example B1 provides a sodium-ion battery cell. Each sodium-ion battery cell includes an electrode assembly formed by a positive electrode plate, a separator, and a negative electrode plate, and further includes an electrolytic solution.

The sodium-ion battery cell in Comparative Example B1 is prepared with reference to the sodium-ion battery cell in Example B1. The difference lies in:

In the sodium-ion battery cell of Comparative Example B1, the sodium-ion positive electrode active material included in the positive electrode plate of the sodium-ion battery cell is the positive electrode material composition in Comparative Example A1.

2. Measurement of the relevant performance of the positive electrode material composition and the sodium-ion battery cell in each example:

2.1 Testing of characterization and relevant performance of the positive electrode material composition in each example:

The positive electrode material compositions provided in Examples A1 to A11 and Comparative Example A1 were each subjected to the measurement of relevant characteristics in Table 1 below according to the following methods. The measurement results are shown in Table 1:

Method for measuring the element content of a nickel-iron-manganese-based sodium-ion battery positive electrode active material: An Agilent ICP-OES730 was used to obtain an inductively coupled plasma optical emission spectrum (ICP), then, contents of each metal element in the positive electrode material compositions provided in Examples A1 to A11 and Comparative Example A1 were calculated based on ICP results, and a molar content of each metal element in a unit molar amount of the positive electrode material composition was converted according to a molar mixing ratio of each nickel-iron-manganese-based sodium-ion battery positive electrode active material in each composition.

Method for measuring the charge/discharge specific capacity: The charge/discharge specific capacities of the positive electrode material compositions provided in Examples A1 to A11 and Comparative Example A1 were measured separately according to the method for measuring the charge/discharge specific capacity of the positive electrode material composition of the embodiments of the present application described above.

2.2 Testing of the relevant performance of the sodium-ion battery cell and the positive electrode plate thereof in each example:

The sodium-ion battery cells and the positive electrode plates thereof provided in the Examples B1 to B11 and Comparative Example B1 were each subjected to the measurement of relevant performance in Table 2 below according to the following methods. The measurement results are shown in Table 2:

CW measurement method: The positive electrode in each battery cell in Examples B1 to B17 and Comparative Examples B1 to B2 was punched into a 1540.25 $mm^2$ electrode plate by a punching machine, and the weight of a pure active substance layer was obtained by weighing and subtracting the aluminum foil weight, and the weight of the pure active substance layer was recorded as the weight of the active substance layer/1540.25 $mm^2$.

Method for measuring the compacted density of a positive electrode plate: For the compacted density of the positive electrode plate, reference may be made to the method for testing the initial discharge specific capacity and the initial charge-discharge efficiency of lithium manganese oxide as a positive electrode material for lithium-ion batteries, with details referred to the GB/T 39864-2021 standard or GB/T 42161-2022. Specifically, reference may be made to the testing steps of the following parameters:

The positive electrode in each battery cell in Examples B1 to B17 and Comparative Examples B1 to B2 was punched into a positive electrode plate with a diameter of 14 mm using a punching machine, and the mass $m_c$ and the thickness $d_c$ of the positive electrode plate were separately measured using an electronic balance and a desktop digital thickness gauge; a sufficient number of aluminum foil substrates with a diameter of 14 mm were punched out using a punching machine, and the mass $m_{Al}$ and the thickness $d_{Al}$ of the aluminum foil substrate were separately measured using an electronic balance and a desktop digital thickness gauge; the compacted density of each positive electrode plate was calculated according to the following formula:

Compacted density of the positive electrode plate $\rho_c = (m_c - m_{Al}) \times 106 \div [\pi (\varphi/2) \times (d_c - d_{Al})]$;

where $\mu_c$ represents the compacted density of the positive electrode plate, in a unit of grams per cubic centimeter ($g/cm^3$);

$m_c$ represents the mass of the positive electrode plate, in a unit of grams (g);

$m_{Al}$ represents the mass of the aluminum foil substrate, in a unit of grams (g);

$\psi$ represents the diameter of the positive electrode plate, in a unit of millimeters (mm);

$d_c$ represents the thickness of the positive electrode plate, in a unit of micrometers ($\mu m$);

$d_{Al}$ represents the thickness of the aluminum foil substrate, in a unit of micrometers ($\mu m$).

Cycle retention rate (%): At 25 °C, each battery cell in Examples B1 to B17 and Comparative Examples B1 to B2 was charged at the constant current of 0.33 C to 3.85 V, then charged at the constant voltage of 3.85 V until the current was 0.05 C, and then discharged at the constant current of 1 C to 1.5 V, which constituted one charging and discharging cycle. With the initial discharge capacity being 100%, the capacity retention rate after 1000 battery cycles was calculated. Capacity retention rate after 1000 battery cycles (%) = discharge capacity of the 1000th cycle / initial discharge capacity × 100%.

Energy density: Each battery cell in Examples B1 to B17 and Comparative Examples B1 to B2 was charged at the 0.33 C rate to a voltage equal to 4.2 V at room temperature, and then discharged at the 0.33 C rate to a voltage equal to 2.0 V, and the discharge energy S0 was measured. Then the mass M of the battery cell corresponding to S0 was measured, and the energy density (mass energy density) of the battery cell was calculated according to the S0/M formula.

Resistance (DCR) growth rate (%): At 25 °C, the battery cell was charged at the constant current of 0.33 C rate to the voltage of 4.1 V, left standing for 5 minutes, discharged at 1 C to 1.5 V, left standing for 15 minutes, charged again at the constant current of 0.33 C rate to the voltage of 4.1 V, then discharged at 0.33 C to 50% SOC, and left standing for 30 minutes; then the voltage was recorded, a 4 C pulse discharge was performed for 30 seconds, and the voltage after the pulse discharge was recorded.

At 25 °C, the cell after 1000 cycles was charged at the constant current of 0.33 C rate to the voltage of 4.1 V, left standing for 5 minutes, discharged at 1 C to 1.5 V, left standing for 15 minutes, charged again at the constant current of 0.33 C rate to the voltage of 4.1 V, then discharged at 0.33 C to 50% SOC, and left standing for 30 minutes; the voltage was recorded, a 4 C pulse discharge was performed for 30 seconds, and the voltage after the pulse discharge was recorded.

The DCR was calculated and obtained according to a formula, and the calculation formula is: DCR = (voltage at the end of standing - voltage after pulse discharge) / pulse current.

$$\text{DCR growth rate} = \text{cell DCR after 1000 cycles} / \text{initial cell DCR}.$$

Table 1

| Examples | Total molar content of Na element in 1 mole of the composition /mol | Total molar content of Ni element in 1 mole of the composition /mol | Total molar content of Mn element in 1 mole of the composition /mol | Total molar content of Fe element in 1 mole of the composition /mol | Total molar content of Cu element in 1 mole of the composition /mol | Q element in 1 mole of the composition | | Doping metal element in 1 mole of the composition | | Discharge specific capacity of the composition mAh/g |
|---|---|---|---|---|---|---|---|---|---|---|
| | | | | | | Total molar content / mol | Element type | Total molar content / mol | Element type | |
| Example A1 | 0.890 | 0.227 | 0.390 | 0.280 | 0.027 | 0.053 | Zn | 0.023 | Ca, Al | 126 |
| Example A2 | 0.891 | 0.229 | 0.391 | 0.278 | 0.030 | 0.050 | Zn | 0.023 | Ca, Al | 125 |
| **Example** A3 | 0.898 | 0.240 | 0.398 | 0.264 | 0.048 | 0.032 | Zn | 0.018 | Ca, Al | 122 |
| Example A4 | 0.903 | 0.248 | 0.403 | 0.255 | 0.060 | 0.020 | Zn | 0.015 | Ca, Al | 120 |
| **Example** A5 | 0.904 | 0.250 | 0.404 | 0.252 | 0.064 | 0.016 | Zn | 0.014 | Ca, Al | 119 |
| Example A6 | 0.905 | 0.252 | 0.405 | 0.250 | 0.067 | 0.013 | Zn | 0.013 | Ca, Al | 118 |
| Example A7 | 0.906 | 0.253 | 0.406 | 0.249 | 0.069 | 0.011 | Zn | 0.013 | Ca, Al | 117 |
| Example A8 | 0.906 | 0.253 | 0.354 | 0.241 | 0.121 | 0.018 | Zn | 0.013 | Ca, Al | 116 |
| Example A9 | 0.890 | 0.187 | 0.407 | 0.280 | 0.013 | 0.093 | Zn | 0.023 | Ca, Al | 128 |
| Example A10 | 0.903 | 0.248 | 0.403 | 0.255 | 0.060 | 0.020 | Ti | 0.015 | Zr, Al | 119 |
| Example A11 | 0.903 | 0.248 | 0.403 | 0.255 | 0.060 | 0.020 | Mg | 0.015 | Sn, Al | 121 |
| Comparative Example A1 | 0.883 | 0.160 | 0.379 | 0.295 | 0.011 | 0.127 | Zn | 0.028 | Ca, Al | 130 |

Table 2

| Examples | Positive electrode plate | | | Battery cell | | |
|---|---|---|---|---|---|---|
| | CW mg/1540.25 mm$^2$ | Compacted density of electrode plate g/cm$^3$ | Type and content of linear conductive agent | Resistance (DCR) growth rate % | Energy density of cell Wh/kg | Cycle retention rate % |
| Example B1 | 300 | 2.95 | Carbon nanotube Content: 0.5% | 173 | 139 | 77 |
| Example B2 | 300 | 2.98 | Carbon nanotube Content: 0.5% | 172 | 138 | 78 |
| Example B3 | 300 | 3.05 | Carbon nanotube Content: 0.5% | 170 | 136 | 80.3 |
| Example B4 | 300 | 3.1 | Carbon nanotube Content: 0.5% | 168 | 134 | 82 |
| Example B5 | 300 | 3.13 | Carbon nanotube Content: 0.5% | 163 | 132 | 83 |
| Example B6 | 300 | 3.16 | Carbon nanotube Content: 0.5% | 159 | 131 | 84 |
| Example B7 | 300 | 3.2 | Carbon nanotube Content: 0.5% | 155 | 128 | 86 |
| Example B8 | 300 | 3.2 | Carbon nanotube Content: 0.5% | 189 | 124 | 87 |
| Example B9 | 300 | 2.95 | Carbon nanotube Content: 0.5% | 195 | 140 | 75 |
| Example B10 | 300 | 3.1 | Carbon nanotube Content: 0.5% | 164 | 132 | 83 |
| Example B11 | 300 | 3.1 | Carbon fiber Content: 0.8% | 172 | 124 | 80 |
| Comparative Example B1 | 300 | 3.2 | Carbon nanotube Content: 0.5% | 240 | 142 | 65 |

Based on the Tables 1 and 2, the comparison between the examples and the comparative examples shows that adjusting and controlling the total molar content of each raw material of the nickel element, the manganese element, and the copper element, as well as the single element of the metal element represented by Q in the positive electrode material composition of the embodiments of the present application within a certain range can improve the stability of the DCR of the corresponding sodium-ion battery cell. Under the same charging and discharging conditions, the DCR growth rate of the sodium-ion battery cell is controlled within a corresponding range.

Further comparison between Examples A1 to A7 and Examples A8 to A9, and between Examples B1 to B7 and Examples B8 to B9 shows that simultaneously adjusting the copper element and the zinc element in the positive electrode material composition can relatively significantly affect the DCR stability of the corresponding sodium-ion battery cell. For example, when the copper element and the zinc element in a unit molar amount of the positive electrode material composition are respectively adjusted to the amounts in Examples A8 and A9, the DCR growth rate of the corresponding sodium-ion battery cell is higher relative to the DCR growth rate of the sodium-ion battery cell in Examples B1 to B7. Therefore, in the positive electrode material composition, the total copper element molar content and zinc element molar content can improve the DCR growth of the battery cell.

According to Example A4 and Examples A10 to A11, as well as Example B4 and Examples B10 to B11, it shows that when the zinc element in the positive electrode material composition of the embodiments of the present application is replaced with the magnesium element or the titanium element, the DCR of the sodium-ion battery cell including the corresponding positive electrode material composition can be kept relatively stable during the charging and discharging processes. For example, under the same charging and discharging conditions, the DCR growth rates of the sodium-ion battery cells in Examples B10 to B11 are all lower than 180%.

On this basis, based on Tables 1 and 2, the positive electrode material composition of the embodiments of the

present application exhibits relatively high specific capacity, and the corresponding sodium-ion battery cell simultaneously exhibits good energy density and cycle performance.

Based on Table 2, the positive electrode plate including the positive electrode material composition of the embodiments of the present application can achieve a higher compacted density. Therefore, the positive electrode material composition of the embodiments of the present application can enable the electrode plate to possess a relatively high electrode plate compacted density.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

**1.** A positive electrode material composition, comprising at least two nickel-iron-manganese-based sodium-ion battery positive electrode active materials, wherein the nickel-iron-manganese-based sodium-ion battery positive electrode active materials are physically mixed, and a mixture of the nickel-iron-manganese-based sodium-ion battery positive electrode active materials further comprises a Cu element and a Q element; in a unit molar amount of the positive electrode material composition, a total molar content of Na is 0.78-1 mol;

a total molar content of Ni is 0.12-0.38 mol;
a total molar content of Mn is 0.18-0.48 mol;
a total molar content of Fe is 0.18-0.35 mol;
a total molar content of Q is 0.01-0.12 mol; and
a total molar content of Cu is 0.01-0.14 mol;
wherein the Q comprises at least one of a Zn element, an Mg element, and a Ti element.

**2.** The positive electrode material composition according to claim 1, wherein in a unit molar amount of the positive electrode material composition, a molar content of at least one of the Na element, the Ni element, the Mn element, the Fe element, the Cu element, and a Y element is as follows:

the total molar content of the Na is 0.8-1 mol;
the total molar content of the Ni is 0.15-0.35 mol;
the total molar content of the Mn is 0.20-0.45 mol;
the total molar content of the Fe is 0.20-0.33 mol;
the total molar content of the Q is 0.01-0.06 mol; and
the total molar content of the Cu is 0.02-0.09 mol.

**3.** The positive electrode material composition according to claim 1 or 2, wherein at least one of the nickel-iron-manganese-based sodium-ion battery positive electrode active materials further comprises an active and/or inert doping metal element; in a unit molar amount of the positive electrode material composition, a total molar content of the doping metal element is greater than 0 and less than or equal to 0.13 mol;
and/or

in a unit molar amount of the positive electrode material composition, a ratio of a molar content of the Na element to a total molar content of other metal elements is (0.81-0.89):1;
and/or
the Cu element and the Q element are distributed in different nickel-iron-manganese-based sodium-ion battery positive electrode active materials.

**4.** The positive electrode material composition according to any one of claims 1 to 3, wherein at least one of the nickel-iron-manganese-based sodium-ion battery positive electrode active materials further comprises an active and/or inert

doping metal element; in a unit molar amount of the positive electrode material composition, a total molar content of the doping metal element is greater than 0 and less than or equal to 0.1 mol;
and/or
in a unit molar amount of the positive electrode material composition, a ratio of a molar content of the Na element to a total molar content of other metal elements is (0.82-0.89):1.

**5.** The positive electrode material composition according to claim 3 or 4, wherein the doping metal element comprises at least one of V, Ca, Cr, Al, Sc, Sn, Sb, Zr, Nb, Ru, and Ir.

**6.** The positive electrode material composition according to any one of claims 1 to 5, wherein the nickel-iron-manganese-based sodium-ion battery positive electrode active material comprising the Q element satisfies at least one of the following (1) to (4):

(1) a Dv50 particle size is 3-8 μm;
(2) a Dv90 particle size is 8-16 μm;
(3) a compacted density under a pressure of 3 tons is higher than 3.1 g/cm$^3$; and
(4) a specific surface area is 0.4-1.0 m$^2$/g.

**7.** The positive electrode material composition according to any one of claims 1 to 6, wherein the nickel-iron-manganese-based sodium-ion battery positive electrode active material comprising the Q element satisfies at least one of the following (1) to (4):

(1) a Dv50 particle size is 4-6.5 μm;
(2) a Dv90 particle size is 10-14 μm;
(3) a compacted density under a pressure of 3 tons is 3.1-3.4 g/cm$^3$; and
(4) a specific surface area is 0.6-0.9 m$^2$/g.

**8.** The positive electrode material composition according to any one of claims 1 to 7, wherein the nickel-iron-manganese-based sodium-ion battery positive electrode active material comprising the Cu element satisfies at least one of the following (1) to (4):

(1) a Dv50 particle size is 5-11 μm;
(2) a Dv90 particle size is 13-19 μm;
(3) a compacted density under a pressure of 3 tons is 3.0-3.3 g/cm$^3$; and
(4) a specific surface area is 0.4-0.7 m$^2$/g.

**9.** The positive electrode material composition according to any one of claims 1 to 8, wherein the nickel-iron-manganese-based sodium-ion battery positive electrode active material comprising the Cu element satisfies at least one of the following (1) to (4):

(1) a Dv50 particle size is 6.5-10 μm;
(2) a Dv90 particle size is 14.5-18 μm;
(3) a compacted density under a pressure of 3 tons is 3.0-3.25 g/cm$^3$; and
(4) a specific surface area is 0.5-0.6 m$^2$/g.

**10.** The positive electrode material composition according to any one of claims 1 to 9, wherein each of the nickel-iron-manganese-based sodium-ion battery positive electrode active materials independently satisfies at least one of the following (1) to (2):

(1) a crystal structure comprises an O3 phase layered metal oxide, and the O3 phase layered metal oxide accounts for 95% or more of a total weight of the layered oxides; and
(2) a single crystal is comprised, and a morphology of the single crystal is block-like;

and/or
a discharge specific capacity of the positive electrode material composition at 1.5-4.2 V and 0.1 C is 115-128 mAh/g.

**11.** The positive electrode material composition according to any one of claims 1 to 10, wherein a discharge specific capacity of the positive electrode material composition at 1.5-4.2 V and 0.1 C is 120-128 mAh/g.

**12.** A preparation method for the positive electrode material composition according to any one of claims 1 to 11, comprising the following steps:
physically mixing at least two nickel-iron-manganese-based sodium-ion battery positive electrode active materials according to a molar content ratio of the Na, the Ni, the Mn, the Fe, the Q, and the Cu comprised in a unit molar amount of the positive electrode material composition, to form the positive electrode material composition.

**13.** A positive electrode, comprising a positive electrode active substance layer, wherein the positive electrode active substance layer comprises the positive electrode material composition according to any one of claims 1 to 11.

**14.** The positive electrode according to claim 13, wherein a content of the positive electrode active substance layer on a single surface of a current collector is 260-350 mg/1540.25 $mm^2$; and/or

a compacted density of an electrode plate of the positive electrode is 2.6-3.4 $g/cm^3$; and/or
a porosity of the positive electrode active substance layer is 40-70%; and/or
the positive electrode is an electrode plate, and a ratio of a thickness from one surface of the electrode plate to the other opposite surface of the electrode plate to a thickness of the current collector is (7-15):1; and/or
the positive electrode is an electrode plate, and a film resistance of the electrode plate is 0.5-5 mΩ; and/or
a conductive agent comprised in the positive electrode active substance layer comprises a linear conductive agent.

**15.** The positive electrode according to claim 13 or 14, wherein a content of the positive electrode active substance layer on a single surface of a current collector is 280-320 mg/1540.25 $mm^2$; and/or

a compacted density of an electrode plate of the positive electrode is 2.8-3.2 $g/cm^3$; and/or
a porosity of the positive electrode active substance layer is 50-65%; and/or
the positive electrode is an electrode plate, and a ratio of a thickness from one surface of the electrode plate to the other opposite surface of the electrode plate to a thickness of the current collector is (8-14):1; and/or
the positive electrode is an electrode plate, and a film resistance of the electrode plate is 0.5-3 mΩ.

**16.** The positive electrode according to claim 14, wherein the linear conductive agent satisfies at least one of the following (1) to (5):

(1) a mass content of the positive electrode active substance layer is 0.1-2.5%;
(2) an aspect ratio is (40-3000):1;
(3) a length is 0.5-5 μm;
(4) a diameter is 2-10 nm; and
(5) at least one of a carbon nanotube, a carbon fiber, and a conductive oxide nanowire is comprised.

**17.** The positive electrode according to claim 16, wherein the linear conductive agent satisfies at least one of the following (1) to (4):

(1) a mass content of the positive electrode active substance layer is 0.3-0.7%;
(2) an aspect ratio is (50-2500):1;
(3) a length is 0.5-2 μm; and
(4) a diameter is 3-7 nm.

**18.** A sodium battery, comprising the positive electrode according to any one of claims 13 to 17.

**19.** The sodium battery according to claim 18, wherein the sodium battery is a sodium battery cell, and the sodium battery cell satisfies at least one of the following (1) to (3):

(1) an operating voltage is 1.5-4.0 V; and/or
(2) an energy density at 1.5-4.0 V is 120-130 Wh/Kg; and
(3) a direct current resistance growth rate of the sodium battery cell after 1000 cycles is lower than 180%.

**20.** An electric device, comprising the sodium battery according to claim 18 or 19.

10
12
11

FIG. 1

10
12
11
12

FIG. 2

20

FIG. 3

23
20
22
22
21

FIG. 4

30
20
20
20

FIG. 5

40

FIG. 6

41
40
30
30
30
30
30
30
42

FIG. 7

FIG. 8

## INTERNATIONAL SEARCH REPORT

International application No. **PCT/CN2024/108984**

**A. CLASSIFICATION OF SUBJECT MATTER**

H01M 4/36 (2006.01)i； H01M4/525(2010.01)i

According to International Patent Classification (IPC) or to both national classification and IPC

**B. FIELDS SEARCHED**

Minimum documentation searched (classification system followed by classification symbols)

IPC:H01M 4

Documentation searched other than minimum documentation to the extent that such documents are included in the fields searched

Electronic data base consulted during the international search (name of data base and, where practicable, search terms used)

CNTXT, VCN, ENTXT, VEN, CJFD: 正极, Na, Ni, Fe, Mn, Cu, Mg, Ti, Zn, 铜, 镁, 钛, 锌, 结构稳定性, 循环, 直流内阻, DCIR, DCR, 电阻, 掺杂

**C. DOCUMENTS CONSIDERED TO BE RELEVANT**

| Category* | Citation of document, with indication, where appropriate, of the relevant passages | Relevant to claim No. |
|---|---|---|
| Y | CN 116565183 A (CONTEMPORARY AMPEREX TECHNOLOGY CO., LTD.) 08 August 2023 (2023-08-08) description, embodiment 2, and table 1 | 1-20 |
| Y | CN 115924999 A (GUANGDONG JINSHENG NEW ENERGY CO., LTD.) 07 April 2023 (2023-04-07) description, paragraphs 5-21 | 1-20 |
| A | CN 115020679 A (SHANGHAI ENERGY NEW MATERIALS TECHNOLOGY CO., LTD.) 06 September 2022 (2022-09-06) entire document | 1-20 |
| A | CN 116605918 A (BEIHANG UNIVERSITY) 18 August 2023 (2023-08-18) entire document | 1-20 |
| A | US 2019252687 A1 (NINGDE AMPEREX TECHNOLOGY LTD.) 15 August 2019 (2019-08-15) entire document | 1-20 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **09 October 2024** | **15 October 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2024/108984**

| Patent document cited in search report | Publication date (day/month/year) | Patent family member(s) | Publication date (day/month/year) |
|---|---|---|---|
| CN 116565183 A | 08 August 2023 | CN 116565183 B | 17 November 2023 |
| CN 115924999 A | 07 April 2023 | None | |
| CN 115020679 A | 06 September 2022 | None | |
| CN 116605918 A | 18 August 2023 | None | |
| US 2019252687 A1 | 15 August 2019 | US 11043675 B2 | 22 June 2021 |
| | | CN 110148711 A | 20 August 2019 |
| | | CN 110148711 B | 04 June 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202311641701


### Non-patent literature cited in the description


- *GB/T 16418*
- *GB/T 24533-2019*
- *GB/T 24586-2009*
- *GB/T 30835-2014*
- *GB/T 39864-2021*
- *GB/T 42161-2022*